# EUROPEAN PATENT SPECIFICATION

(11) **EP 3 968 160 B1**
(45) Date of publication and mention of the grant of the patent: **22.01.2025**
(21) Application number: 20818952.2
(22) Date of filing: 15.05.2020
(51) Int. Cl.: G06F 9/46, G06F 9/54

(54) **INTER-PROCESS COMMUNICATION METHOD AND APPARATUS, AND COMPUTER DEVICE**
INTERPROZESSKOMMUNIKATIONSVERFAHREN UND -GERÄT SOWIE COMPUTERVORRICHTUNG
PROCÉDÉ ET APPAREIL DE COMMUNICATION INTER-PROCESSUS, ET DISPOSITIF INFORMATIQUE

(30) Priority: 03.06.2019 CN 201910478125; 26.06.2019 CN 201910563535
(43) Date of publication of application: 16.03.2022
(73) Proprietor: Huawei Technologies Co., Ltd., Shenzhen, Guangdong 518129 (CN)
(72) Inventor: DU, Dong, Shenzhen, Guangdong 518129 (CN); CHEN, Haibo, Shenzhen, Guangdong 518129 (CN); XIA, Yubin, Shanghai 200241 (CN)
(74) Representative: Goddar, Heinz J.
(86) International application number: PCT/CN2020/090559
(87) International publication number: WO 2020/244369

(56) References cited:
- CN-A- 103 440 169
- CN-A- 103 440 169
- CN-A- 105 068 859
- CN-A- 106 203 082
- CN-A- 106 203 082
- CN-A- 108 469 986
- US-A1- 2005 182 966
- US-A1- 2006 150 194
- US-B2- 7 739 731
- "Java Card(TM) Platform, Version 3.0.1 Connected Edition", no. ; 20090501, 19 September 2017 (2017-09-19), XP051351203, Retrieved from the Internet <URL:http://www.3gpp.org/ftp/tsg_ct/WG6_Smartcard_Ex-T3/API/> [retrieved on 20170919]
- WENHAO LI ET AL: "Reducing world switches in virtualized environment with flexible cross-world calls", PROCEEDINGS OF THE 42ND ANNUAL INTERNATIONAL SYMPOSIUM ON COMPUTER ARCHITECTURE, ISCA '15, 1 June 2015 (2015-06-01), New York, New York, USA, pages 375 - 387, XP055326734, ISBN: 978-1-4503-3402-0, DOI: 10.1145/2749469.2750406
- DU DONG ET AL: "XPC architectural support for secure and efficient cross process call", PROCEEDINGS OF THE SECOND WORKSHOP ON DISTRIBUTED INFRASTRUCTURES FOR DEEP LEARNING, IEEE PRESSPUB767, PISCATAWAY, NJ, USA, 22 June 2019 (2019-06-22), pages 671 - 684, XP059209128, ISBN: 978-1-7281-1436-1, DOI: 10.1145/3307650.3322218

## Description

### TECHNICAL FIELD

This application relates to computer technologies, and in particular, to a method and an apparatus for inter-process communication, a computer device, and the like.

### BACKGROUND

A microkernel-based operating system architecture (microkernel architecture for short) is widely used in scenarios such as a cloud platform, an embedded device, a mobile device, and unmanned driving. The microkernel architecture retains a very small quantity of real core functions of the microkernel architecture, and many components in a conventional operating system kernel (for example, a Linux monolithic kernel architecture) such as a file system and a network protocol stack are placed into a user-mode process for running.

Compared with the conventional operating system kernel, the microkernel architecture can ensure that any module that bears a complex function can be placed in user-mode processes, where different processes can be enabled to run in an isolated manner. This manner can extremely enhance isolation and reliability of the operating system. For example, a file system is merely an application in the microkernel architecture. When a malicious application attacks a file system, only a file that can be accessed by the file system may be accessed by the malicious application, and other file systems and other system components (such as a memory management component) are still in a protected state. In addition, if a file system triggers an internal vulnerability and causes the file system to crash, only the file system itself is affected, but correctness of the entire operating system is not affected. In addition, an administrator can easily restart a file system to continue providing services. This also provides better reliability compared with the conventional operating system kernel.

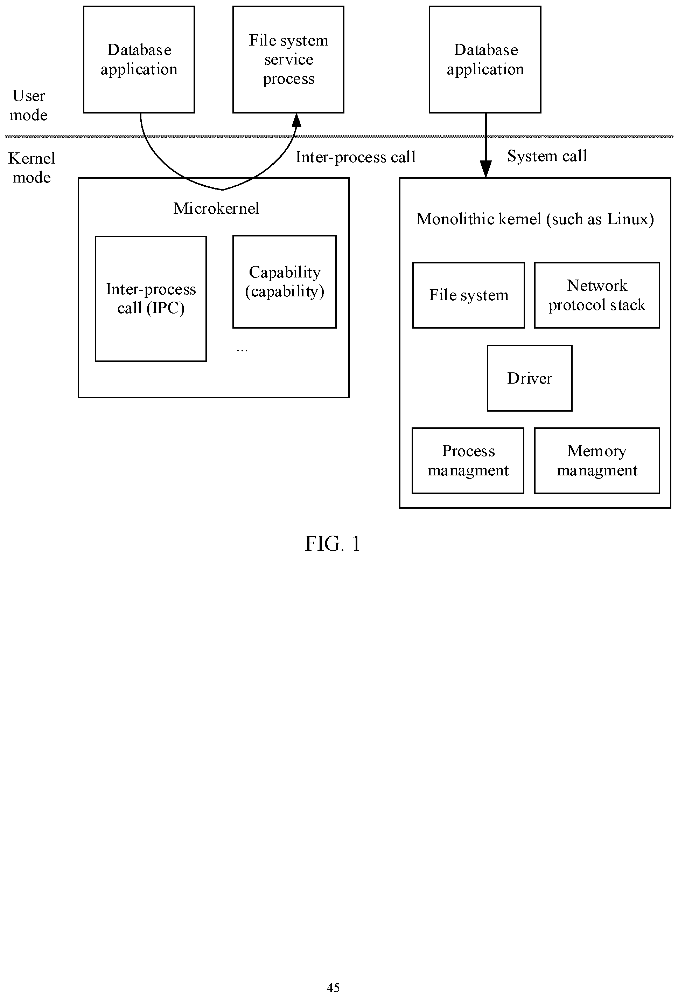

However, the microkernel architecture also brings huge performance loss. In the microkernel architecture, an application obtains a system service through inter-process communication (Inter-Process Communication, IPC). For example, as shown in FIG. 1, in a monolithic kernel architecture, a file system serving as a callee (callee) is deployed in a kernel mode; and when a caller (caller), namely, a database application, needs to communicate with the file system, only one system call is required. However, in the microkernel architecture, the database application and the file system are both deployed in a user mode, and therefore the database application needs to communicate with the file system through IPC.

IPC performance overheads derive from a plurality of aspects, where context switching (sometimes briefly referred to as "switching" in this application) overheads account the most. In the monolithic kernel architecture, interaction between an application and a system service (such as a file system) is implemented by using a system call, where the system call is directly executed by hardware. This makes a single system call highly efficient. However, in the microkernel architecture, a privileged instruction for context switching such as page table switching can only be completed in the kernel mode. Both the caller and the callee run in the user mode, and therefore, the caller and the callee need to trap (trap) into the kernel mode for switching. Kernel intervention leads to a significant increase in communication overheads compared with the monolithic kernel architecture.

For the problem of high IPC communication overheads in the microkernel architecture, a solution of direct process switch (Direct Process Switch) is provided in a conventional technology. In this solution, a kernel is still required to perform IPC processing, but an IPC processing logic is maximally simplified to include only necessary phases. During application of this solution, when an IPC call is executed, the kernel skips other phases to directly switch to a corresponding context, thereby accelerating IPC communication to some extent. However, in this solution, kernel intervention is still required for context switching, and context switching overheads are still relatively high. Consequently, IPC communication duration is still relatively long.
US 2006 / 150 194 A1 discloses a method in which two or more execution contexts of threads are maintained simultaneously using stack switching in an operating environment in which merely one thread can be executed at a given point in time. Execution of instructions in a callee thread is suspended and the execution context including a return address location of a pointer of the callee stack is maintained while instructions are being executed in a caller thread.
US 7 739 731 B2 discloses a method in which a first application instance is associated with a protection domain based on credentials associated with a set of application code that, when executed, gives rise to the application instance. The first application instance executes in a first execution context. An indication is received that the first application instance seeks access to protected functionality associated with a second execution context. In response to receiving the indication, a determining is made as to whether the first application instance has permission to access the protected functionality. The determination is made by determining the protection domain with which the first application instance is associated, and determining if the protection domain with which the first application instance is associated is in the set of one or more protection domains.
Wenhao Li et al: "Reducing World Switches in Virtualized Environment with Flexible Cross-world Calls", 1 June 2015, discloses a method to separate the process of authentication from authorization, wherein a system call happens directly between two mutually distrusting pairs, wherein the number of world switches is reduced.

### SUMMARY

This application provides a method for inter-process communication, and provides an apparatus for implementing the method, a computer program product (for example, an operating system), a storage medium, a computer device, and the like, to shorten IPC communication duration. The following describes this application from a plurality of aspects. It is easy to understand that the following plurality of aspects may be separately implemented, or a combination of any two or more aspects may be implemented. For specific implementations and beneficial effects of the following plurality of aspects, reference may be made to each other.

According to a first aspect, this application provides a method for inter-process communication. The method is applied to a computer device. The computer device includes a hardware layer and an operating system running on the hardware layer. The operating system may be a microkernel architecture-based system, or a monolithic kernel architecture-based system. A caller and a callee that are to perform communication with each other run in the operating system, wherein the caller is a process and the callee is a process. The computer device further includes a communication engine. The communication engine is referred to as an XPC engine in the embodiments and is configured to implement inter-process communication. The communication engine may be disposed on a processor at the hardware layer or may be used as an independent hardware apparatus. The communication engine may alternatively be implemented through software simulation. The method includes: The caller calls a first instruction (for example, *xcall),* wherein the first instruction is executed by the communication engine to implement switching from a context of the caller to a context of the callee. Further, the callee calls a second instruction (for example, *xret),* wherein the second instruction is executed by the communication engine to implement switching from the context of the callee to the context of the caller. The first instruction and the second instruction are implemented asynchronously. The process in which the first instruction is executed by the communication engine to implement context switching comprises determining the context of the callee based on an identifier of the callee in the first instruction, storing the context of the caller; and switching to the context of the callee, wherein the following step is performed in an asynchronous manner: storing the context of the caller.

The caller and the callee each may be a thread (or process), and a context of a thread (or process) refers to various states of the thread that are maintained in the operating system, and usually includes parts such as a general-purpose register, a page table, a thread private space, and thread metadata that are used by the thread. Because a context may have different definitions and use in different computer systems, the foregoing example context content should not be construed as any limitation of the solutions of this application. In addition, the context mentioned in this application may be an entire context, or a partial context. The caller and the callee each may also be understood as an application in some other embodiments.

When the operating system is a microkernel architecture-based system, the caller and the callee usually run in a user mode. In conventional IPC communication, the caller and the callee can complete context switching only with participation of a kernel, incurring overheads such as overheads of switching between the user mode and the kernel mode, and resulting in relatively long communication duration. By introducing the foregoing communication engine, the caller and the callee can implement direct context switching by calling the first instruction and the second instruction, thereby avoiding kernel intervention to some extent, and shortening IPC communication duration. Similarly, the method can also increase a communication speed when running in a monolithic kernel architecture.

In some implementations, when the communication engine executes the first instruction, the method further includes: obtaining capability information of the caller, where the capability information is used for indicating whether the caller has a permission to call the callee; and executing a process of the context switching when determining, based on the capability information, that the caller has a permission to call the callee. In conventional IPC, capability checking is performed by the kernel. In this application, the capability checking is performed in the communication engine, thereby further reducing kernel intervention, and further shortening the IPC communication duration.

In some implementations, when the communication engine executes the first instruction, the method further includes one or more of the following detections: detecting whether the identifier of the callee is valid, detecting whether the callee is valid, or detecting whether a storage space in which the context of the caller is stored is sufficient. If invalidity or space insufficiency is detected in any one of the foregoing detections, an exception is triggered. The exception is submitted to the kernel for processing. Introduction of detections such as the validity detection and enabling the kernel to process the exception enable the communication engine provided in this application to be more secure and more reliable.

In some implementations, the method further includes: storing the context of the caller, where the context is a partial context of the caller. It should be noted that, storing a context mentioned in this application may refer to storing an entire context or storing a partial context, and this is determined depending on a system requirement. The partial context is key and core context information required by the system. Storing the partial context can reduce a storage amount, thereby reducing storage space occupation, and further shortening the IPC communication duration.

In some implementations, when the communication engine is implemented by using hardware, operations such as accessing the capability information and storing context information may be implemented by accessing a register. The register stores a storage address of corresponding information, to indicate a location of the information.

In some implementations, the method further includes: The caller applies for a memory area, and sets an address of the memory area into a register included in the communication engine; and the caller stores data that is to be transmitted to the callee into the memory area, where the callee is configured to access the memory area by using the address stored in the register, to obtain the data. The caller applies for a segment of memory area, and records address information of the memory area into the register *(seg-reg).* Then, the callee may obtain the data by accessing the register. This memory area is referred to as a relay segment (relay segment) or a relay segment memory in the specific embodiments of this application. In this manner, the callee may directly read, from the memory area pointed by the register, the data that the caller needs to transmit to the callee, thereby avoiding copying the data between the caller and the callee, and further shortening the IPC communication duration.

This application is described by using a memory as an example. However, in some other implementations, the area may alternatively be not a memory, but be a storage area of another type, instead.

In some implementations, the method further includes: The caller calls a third instruction (for example, swapseg), where the third instruction is executed by the communication engine to update an address in a first register (for example, *seg-reg)* to an address in a second register (for example, *seg-list-reg).* In this manner, a user can conveniently and quickly modify the relay segment memory, thereby improving flexibility of using the relay segment memory.

According to a second aspect, this application provides a method for implementing inter-process communication in an operating system. The method is applied to the communication engine (for example, the XPC engine) in the first aspect. The communication engine may be used as an extension unit of a current processor, or may be used as an independent processing unit, or may be implemented through program simulation. The method includes: receiving a first instruction (for example, *xcall#register*) sent by a caller, where the first instruction includes an identifier *(#register)* of a callee; determining a context of the callee based on the identifier of the callee in a service set (for example, *x-entry table)* indicated by a first register (for example, *x-entry-table-reg*), where the first register is configured to store a memory address of the service set, and the service set includes context information of one or more callees; storing a context of the caller into a return information set (for example, *link stack)* indicated by a second register (for example, *link-reg),* where the second register is configured to store a memory address of the return information set, and the return information set includes context information of one or more callers; and switching to the context of the callee, wherein the caller is a process and the callee is a process, wherein the following step is performed in an asynchronous manner: storing the context of the caller into the return information set indicated by the second register. In the foregoing hardware extension or software simulation extension manner, context switching between the caller and the callee is implemented. This avoids kernel intervention to some extent, and shortens IPC communication duration.

In some implementations, both the first register and the second register can be read and written by a kernel. Therefore, in this extension, security configuration interfaces may still be provided for the kernel, for example, a service registration interface, a permission grant interface, and an exception processing interface, to allow the kernel to limit a switching behavior, thereby ensuring security and performance during direct switching in a user mode.

In some implementations, before the determining a context of the callee based on the identifier of the callee in a service set indicated by a first register, the method further includes: determining, based on capability information (for example, *xcall cap bitmap)* indicated by a third register (for example, *xcall-cap-reg),* that the caller has a permission to call the callee, where the third register is configured to store an address of the capability information, and the capability information is used for indicating whether the caller has a permission to call the callee. Capability checking is also implemented in the extended communication engine. This further reduces kernel intervention, shortens the communication duration, and ensures call security.

In some implementations, the method further includes: prefetching either or both of the following information into a cache: the context information of the one or more callees that is included in the service set, or the capability information. The cache is a storage medium that can be read and written more quickly by the communication engine. The service set, the return information set, a capability information set, and the like are stored in a memory, a memory access mechanism is required when the information is read or written, and a cache access speed is higher than that of the memory. Therefore, data access efficiency can be further improved by setting the cache and the foregoing prefetching process. Therefore, the IPC communication duration is further shortened.

The following step is performed in an asynchronous manner: storing the context of the caller into the return information set indicated by the second register. The asynchronous manner herein means that a subsequent operation of the step does not need to wait for completion of the step. In this way, running efficiency of the method can be further improved, so that the IPC communication duration is further shortened.

In some implementations, the step of determining the context of the callee or the step of storing the context of the caller is implemented by using a tagged (tagged) translation lookaside buffer TLB. All the foregoing steps may involve page table switching in memory access, and a refresh operation on a TLB in page table switching can be avoided by using a tagged TLB mechanism, thereby improving the running efficiency of the method.

In some implementations, the method further includes: assigning an access permission for a memory area indicated by a fourth register (for example, *seg-reg)* to the callee, where the fourth register is configured to store address information of the memory area, the memory area (referred to as a relay segment memory in the embodiments) is applied by the caller, and the memory area is used for storing data that is to be transmitted by the caller to the callee. The callee may access the data of the caller by accessing the register, to avoid copying the data between the caller and the callee, thereby further shortening the IPC communication duration. This manner may also be referred to as "register handover".

In some implementations, the method further includes: assigning an access permission for a second memory area indicated by a fourth register (for example, *seg-reg)* and a fifth register (for example, *seg-mask)* to the callee, where the fourth register is configured to store address information of a first memory area, the fifth register stores information used for reducing the first memory area, and the second memory area is a reduced first memory area. In this manner, the memory area that can be accessed by the callee is limited, thereby improving flexibility and security of data transmission.

It should be noted that, an access permission for the register may be preconfigured, and the access permission may include read/write in the user mode, read/write in the kernel mode, or the like. Access permissions of the fourth register and the fifth register may be configured as read/write in the user mode, so that the caller and the callee running in the user mode can access the two registers. The operating system opens an access interface to user-mode applications, where this is similar to sharing a memory, and a user accesses a register by using the interface.

In some implementations, the method further includes: receiving a second instruction (for example, *xret)* sent by the callee, where the second instruction is used for indicating to return to the context of the caller; obtaining the context of the caller from the return information set (for example, *link stack)* indicated by the second register (for example, *link-reg);* and switching to the context of the caller.

In some implementations, the stored context of the caller is a selected partial context of the caller. The caller and the callee each may be a thread (or process), and a context of a thread (or process) refers to various states of the thread that are maintained in the operating system, and usually includes parts such as a general-purpose register, a page table, a thread private space, and thread metadata that are used by the thread. The context may be entirely stored, or may be partially stored as in this implementation to save storage space, and increase a storage speed, thereby further shortening the IPC communication duration.

The foregoing implementation of the context switching and the relay segment memory provides a basic mechanism for rapid IPC communication. In addition, the operating system, especially the kernel, may also configure and manage the foregoing mechanism, and the like.

According to a third aspect, this application provides an apparatus for inter-process communication in an operating system. The apparatus may be a chip. The apparatus includes a processor core and a plurality of registers. The processor core is configured to perform the method in any implementation of the second aspect. The apparatus further comprises: a first unit, configured to receive a first instruction sent by a caller, wherein the first instruction comprises an identifier of a callee; a second unit, configured to determine a context of the callee based on the identifier of the callee in a service set indicated by a first register, wherein the first register is configured to store a memory address of the service set, and the service set comprises context information of one or more callees; a third unit, configured to store a context of the caller into a return information set indicated by a second register, wherein said step is configured to be performed in an asynchronous manner, wherein the second register is configured to store a memory address of the return information set, and the return information set comprises context information of one or more callers; and a fourth unit, configured to switch to the context of the callee, wherein the caller is a process and the callee is a process.

It should be noted that, the methods or the like provided in this application may also be applied to a monolithic kernel architecture. Information stored in two or more registers mentioned above may alternatively be stored in one register. A quantity of registers is not limited in this application.

### BRIEF DESCRIPTION OF DRAWINGS

The following briefly describes the accompanying drawings of this application. It is clearly that the accompanying drawings in the following description show only some aspects of this application.
FIG. 1 shows a comparison between use of a file system by a microkernel and use of a file system by a microkernel;
FIG. 2 is a schematic architectural diagram of an XPC system according to this application;
FIG. 3(a) to FIG. 3(c) are schematic diagrams of parts related to context switching in an XPC system according to this application;
FIG. 4 is a schematic flowchart of xcall and xret instructions according to this application;
FIG. 5 is a schematic diagram of a part related to a relay segment memory in an XPC system according to this application;
FIG. 6 is a schematic diagram of a memory management method according to this application;
FIG. 7 is a schematic structural diagram of a kernel layer in an XPC system according to this application;
FIG. 8(a) and FIG. 8(b) are schematic diagrams of a concept and application of a split context model according to this application;
FIG. 9 is a schematic flowchart of a part of implementing management and configuration on an XPC engine by a kernel;
FIG. 10 is a schematic flowchart of applying for and releasing a relay segment memory by a kernel;
FIG. 11 is an overall schematic flowchart of an inter-process communication IPC communication solution according to this application;
FIG. 12 shows a comparison between conventional inter-process communication and XPC communication provided in this application;
FIG. 13 is a schematic diagram of application of an XPC solution provided in this application to an Sqlite 3 database according to this application;
FIG. 14 is a schematic diagram of a test result obtained by applying the XPC solution provided in this application to the Sqlite 3 database;
FIG. 15(a) and FIG. 15(b) are schematic diagrams of dynamically extending a thread of a server according to this application;
FIG. 16 is a schematic diagram of applying a solution provided in this application to Linux;
FIG. 17(a) and FIG. 17(b) are schematic diagrams of a test result obtained by applying the solution provided in this application to Linux; and
FIG. 18 is a schematic structural diagram of a terminal device according to this application.

### DESCRIPTION OF EMBODIMENTS

IPC performance overheads mainly derive from two aspects: context switching overheads and data transmission overheads. For the context switching overheads, refer to the description in the background. A context in this application generally refers to a thread (or process) context, and specifically refers to various states of the thread (or process) that are maintained in an operating system, and usually includes a register, a page table, a thread private space, thread metadata, and the like that are used by the thread. For the data transmission overheads, a solution of copying or sharing a memory is usually used to complete cross-process data transmission. Copying brings high performance overheads, especially for some applications with relatively large data flows. Although the solution of sharing a memory can achieve zero copy theoretically, there is a security problem of time of check to time of use (Time of Check to Time of Use, TOCTTOU).

This application provides a software-hardware collaboration solution. First, a hardware architecture for a cross-process call is designed in this application. This solution supports context switching in underlying hardware. In the context switching, various states and information of two process spaces (a caller and a callee) need to be switched. To ensure a control flow of the cross-process call, call information is recorded in a hardware-controlled data structure. Information in this data structure is used in checking during process return.

Further, in this solution, permission checking originally completed in a kernel is transferred to hardware for completion.

Further, the solution further provides support for rapid data transmission in hardware. The solution supports zero-copy data transmission by simply extending hardware, such as a TLB.

In addition, this application provides a software design solution of a kernel system based on the foregoing hardware architecture, to ensure security and performance of a direct process call and zero copy.

The following describes implementation of the solutions provided in this application by using specific embodiments. A cross-process communication system provided in this application is named as XPC (cross process call) in the following embodiments, where XPC is merely a name, and should not constitute any limitation on this application.

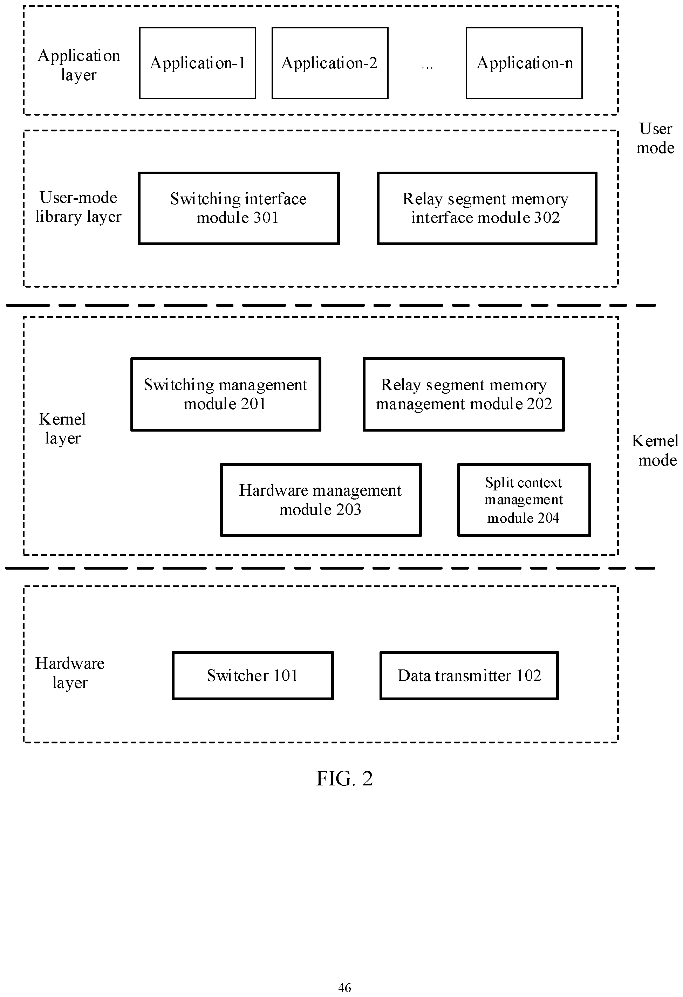

FIG. 2 is a schematic architectural diagram of an XPC system provided in the embodiments. The system includes an application layer, a user-mode library layer, a kernel layer, and a hardware layer.

A plurality of applications: an application -1 to an application -n, run at the application layer. Optimization of inter-process communication provided in this solution is transparent to this layer, to ensure compatibility.

The user-mode library layer includes two modules: a switching interface module 301 and a relay segment memory interface module 302. The two modules provide inter-process communication call interfaces required by the applications, encapsulate a relay segment memory, and provide interfaces similar to those used by the shared memory.

The kernel layer includes four modules: a switching management module 201, a relay segment memory management module 202, an XPC hardware management module 203, and a split context management module 204. The hardware management module 203 is responsible for directly operating a new instruction provided by the hardware layer, to implement inter-process context switching. The switching management module 201 and the relay segment memory management module 202 are respectively responsible for security maintenance management of context switching and data transmission at a software layer. The split context module 204 is responsible for managing, by the kernel, runtime security of a user mode based on a new hardware primitive.

The hardware layer includes two hardware modules: a switcher 101 and a data transmitter 102, to implement inter-process communication capabilities such as context switching and data transmission together with the software layer. The switcher 101 is responsible for implementing functions such as context switching and permission checking, and the data transmitter is responsible for implementing data transmission.

The switcher 101 and the data transmitter 102 may be disposed on an existing processor, to serve as an extension unit of the processor and take advantage of a computing capability of the existing processor; or may serve as one or more hardware units independent of the existing processor, to accelerate the existing processor. In some other embodiments, the switcher 101 and the data transmitter 102 may alternatively be implemented through software simulation.

It should be noted that the division into the switcher 101 and the data transmitter 102 is functional logics, and this does not necessarily mean that the two modules need to be two independent hardware units. Functions of the two modules are described in detail in following descriptions of a hardware design of an XPC engine.

The switcher 101, the switching management module 201, and the split context management module 204 provide rapid context switching interfaces for the user-mode library layer and the application layer. The data transmitter 102 and the relay segment memory management module 202 provide secure and zero-copy cross-process data transmission interfaces for the user-mode library layer and the application layer.

In the entire architecture, division of work of the hardware layer and the software layer is as follows: The hardware layer provides inter-process communication capabilities, including capability checking, context switching, and a secure and effective data transmission mechanism, and the kernel layer manages and controls process communication by performing an operation such as configuring the hardware layer.

It should be noted that, all the component modules shown in FIG. 1 except the applications included in the application layer are related modules in this application. In addition, the module division in FIG. 1 is merely an example for ease of understanding the solution, and should not constitute any limitation on this application. In addition, not all the modules are mandatory.

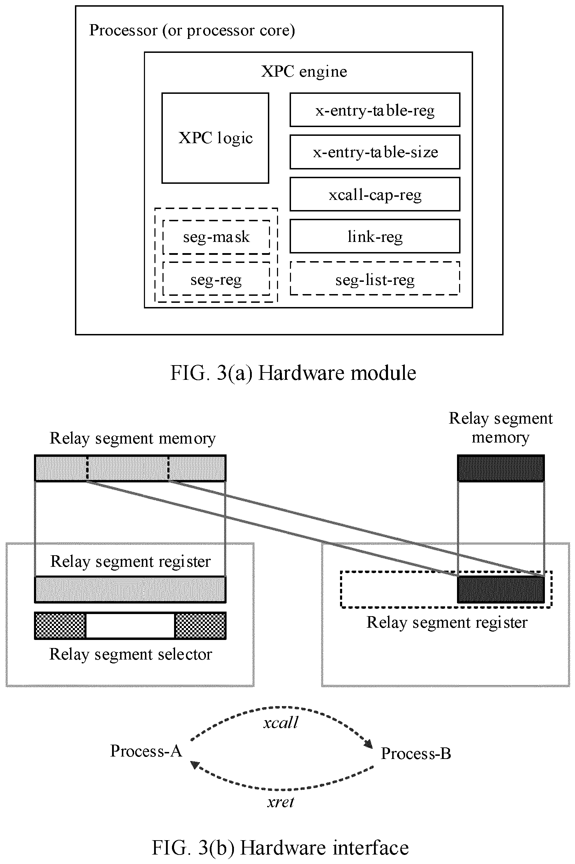

The following describes the hardware design in an XPC solution provided in this application. As shown in FIG. 3(a) to FIG. 3(c), this application mainly provides an XPC engine and a relay segment memory, to provide a hardware basis for resolving two problems: rapid cross-process switching and zero-copy secure data transmission. Before specific implementation is described, several concepts are first described.

A caller (caller), also referred to as a client (client), refers to a party that uses a service in conventional IPC communication or XPC communication provided in this application. The caller may be a process, a thread, or an application, and is specifically determined based on a context of the caller.

A callee (callee), also referred to as a server (server), refers to a party that provides a service in conventional IPC communication or XPC communication provided in this application. The callee may be a process, a thread, or an application, and is specifically determined based on a context of the callee.

It should be noted that, the caller and the callee are merely role names and do not indicate specific processes, threads, or applications. When there are a plurality of callees, a calling chain is formed. For example, if A calls B, and B calls C, A, B, and C form a calling chain.

x-entry (x-entry): One process may create one or more *x-entries.* One *x-entry* is used for indicating one process that can be invoked (invoked) by another process. Each *x-entry* has a unique identifier (identifier, ID or id).

A call capability (xcall cap), an abbreviation of "XPC call capability", is used for recording a capability of each caller. In this embodiment, the xcall cap is represented by a bitmap pointed by a register.

A relay segment memory is referred to as a relay segment for short (relay segment, relay-seg for short). In this embodiment, the relay segment memory refers to a memory area with continuous address spaces, or may be understood as mapping from a segment of continuous virtual address spaces to a segment of continuous physical address spaces. Mapping (or referred to as address translation) from a virtual address to a physical address is implemented by a register newly added in this embodiment. The register may be transferred by the caller (caller) to the callee (callee). Therefore, the callee can directly access data in a virtual address space indicated by the register. The relay segment memory may also be masked before being transferred to the callee, in other words, only a part of a memory space is transferred (refer to FIG. 3(b)). It should be noted that, in another embodiment, by introducing a page table (page table) design, the relay segment memory provided in this application may also support discontinuous memory spaces.

A program model (which may also be understood as a basic use principle) of the XPC hardware design is as follows: The server (server) registers an x-entry by transferring a procedure handler (procedure handler), a handler thread, and a maximum context number. The maximum context number is used for indicating a maximum quantity of simultaneous callers. The handler thread is used for providing a runtime state for the client, and the handler thread can be shared by a plurality of *x-entries.* After successfully registering the *x-entry,* the server enters a waiting state. The client usually obtains an ID of an *x-entry* and an XPC call capability of the client from a parent process or a naming service. Then, the client may call the foregoing *x-entry* by executing a specific instruction *(xcall* in this embodiment). *xcall* may carry a parameter, and the parameter is used for indicating an ID of the to-be-called x-entry. In this embodiment, the ID is stored in any general-purpose register. Therefore, the parameter may be identified by using an identifier *#reg* of the register. After the service is completed, return by using a specific instruction (for example, *xret). xcall* and *xret* are two hardware-level instructions provided by the XPC engine. The two instructions are called bypassing the kernel and hardware is directly enabled to participate in context switching, thereby greatly improving efficiency of context switching. Further, data transmission between the client and the server is implemented by using the relay segment memory and the newly added register, to avoid data copying.

An instruction, a command, a function, or a function interface refers to a callable name that is externally displayed and that is of a method process implemented by software or hardware.

The following describes in detail the components included in the XPC engine and functions of the components. FIG. 3(a) is a schematic structural diagram of the XPC engine according to this embodiment. The XPC engine is disposed on an existing processor core to serve as an extension of the existing processor core. The XPC engine includes a plurality of registers and an XPC logic (logic). In another embodiment, the XPC engine may serve as a processing unit independent of the existing processor, to accelerate the existing processor. In another embodiment, the XPC engine may alternatively be implemented through software simulation. The software runs in a higher-level mode, for example, a permission-level machine mode (machine mode), for example, RISC-V that has a higher permission than a supervisor mode (supervisor mode). In this case, the XPC engine may be implemented by using software and runs in the machine mode.

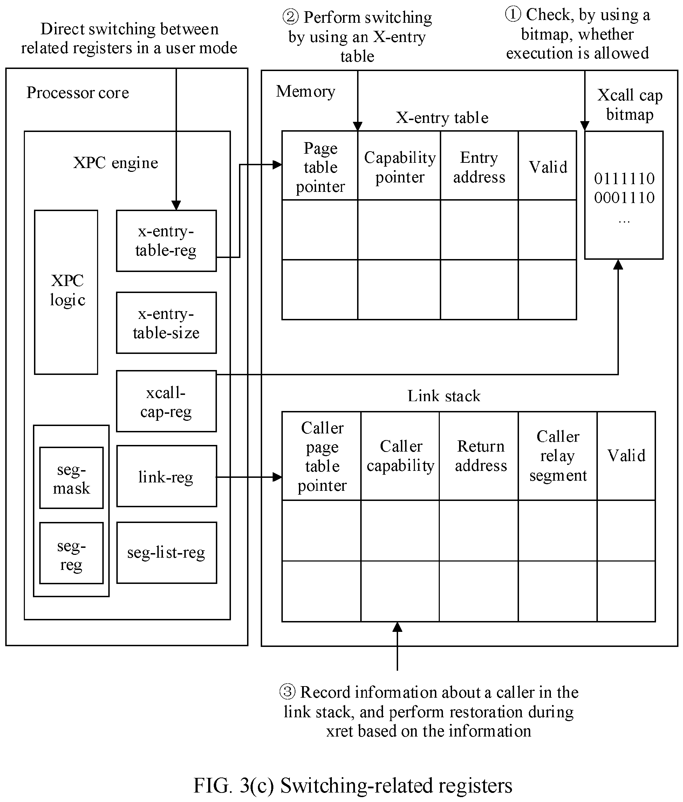

FIG. 3(c) further shows meanings of registers related to context switching based on FIG. 3(a).

A register *x-entry-table-reg* is configured to store a physical address. The physical address is used as a base address and points to a memory area. The memory area stores information about a service that can be provided by the server. The information may be stored in a form of an *x-entry table* shown in the figure. The "base address" is a start address of an address range. Each row in the *x-entry table* indicates an *x-entry.* An ID of each *x-entry* may be identified by using a row number of the row, or a column may be added to the table, where the column is used for storing the ID of the x-entry. Each *x-entry* includes attributes such as a page table pointer *(page table pointer), a* capability pointer *(capability pointer),* an entry address *(entry address),* and a valid bit *(valid).* The page table pointer is a page table base address, that is, a value stored in a page table register for page table translation in a conventional technology. The capability pointer is also a base address, is a value stored in the newly added register *xcall-cap-reg* in this embodiment, and points to a data structure. The entry address refers to an address of a function executed by the processor after the processor switches to a context of the server. The valid bit indicates whether an x-entry is valid. It should be noted that, content of the table may be customized for reducing or extension in different architectures, and the figure is merely an example.

A register *x-entry-table-size* is configured to store size information of the data structure. Specifically, the register is configured to store a size of the *x-entry-table.*

The register *xcall-cap-reg* is configured to store a physical address. The physical address is used as a base address and points to a memory area. The memory area stores a bitmap (bitmap) *xcall-cap bitmap* shown in the figure. The bitmap represents a capability or a permission that a caller can perform XPC. Process XPC communication can be performed only when a bit specified in the bitmap is correctly set. In other words, context switching can be performed only when a process has a proper permission. A size of the bitmap may also be stored in the *x-entry-table-size.* Specifically, a value of each bit whose identifier is i in the bitmap represents whether the caller can call an *x-entry* whose id is i. For example, a current caller is a thread m, and the bitmap may be stored in a per-thread memory region (per-thread memory region) of the thread m. If a value of a bit whose identifier is 2 in the bitmap is 1, it indicates that the thread m can call an x-entry whose id is 2. If the value of the bit whose identifier is 2 is 0, it indicates that the thread m cannot call an *x-entry* whose id is 2. A meaning of a value of each bit may alternatively be opposite to that in the foregoing example. In this embodiment, the bitmap is maintained by the kernel, but is checked by hardware when the hardware executes *xcall.*

It should be noted that, the foregoing manner of using a bitmap to represent a capability is merely an example. In another embodiment, a meaning of each bit in the bitmap may be assigned in another manner as required. For example, a value of each bit whose identifier is i in the bitmap represents whether a callee can be called by a caller whose id is i. In another example, there are a plurality of bitmaps to define a call capability of the caller and authorization of the callee in a plurality of manners, and the like.

A register *link-reg* is configured to store a physical address. The physical address is used as a base address and points to a memory area. The memory area stores a stack *link stack* shown in the figure. The *link stack* is responsible for storing information used for returning to a context of the caller (the information may also be referred to as call information). The information is used for restoring a state of the caller when a specific instruction (for example, *xret)* is executed to return to the caller. As shown in the figure, information in each row in the *link stack* may be referred to as a linkage *(linkage)* record, including a caller page table pointer *(caller page table pointer),* a caller capability *(caller capability),* a return address *(return address),* a caller relay segment *(caller relay segment),* and a valid bit *(valid).* A format of information stored in these columns is similar to that of the *x-entry table,* and details are not described again. It should be noted that, content of the stack may be customized for reducing or extension in different architectures. For example, a relay segment memory list of the caller is added.

The *link stack* is actually used for storing the context of the caller for restoration after the service is completed.

It should be noted that, context is stored in two manners: context is stored in the *link stack* when hardware executes the *xcall* instruction, and reference may be made to the foregoing descriptions about the *link stack;* and context is stored in software, to be specific, some states are stored by software in a software memory before the *xcall* instruction is called, where these states may be an entire context, or may be a partial context. A selection policy of storing entire context or partial context may be determined depending on a system requirement, and this is not limited in this application. For example, context may be stored based on trustworthiness of the callee: If the callee is trustworthy, a small amount of context information is stored; or if the callee is untrustworthy, all context information is stored.

The foregoing four registers are related to direct context switching, and in this embodiment, are mainly configured to implement a context switching process without kernel intervention. The foregoing four registers mainly maintain three data structures: the *x-entry table,* the *link stack,* and the *xcall-cap bitmap.* During context switching, refer to FIG. 3(c). The following steps are performed: □ check, by using *xcall-cap bitmap,* whether switching is allowed; □ switch to the context of the server by using the *x-entry table;* and □ return, based on the information recorded in the *link stack,* to the context of the caller after service execution is completed. However, not all the three data structures are mandatory. In this embodiment, the three data structures are all allowed to be accessed in a kernel mode but not allowed to be accessed by a user mode. It should be noted that, the three data structures are merely examples. During specific implementation, information included in the three data structures may alternatively be stored in another form. For example, information stored in the *xcall-cap bitmap* may alternatively be stored in a form of a radix tree (radix tree). Similar to a page table, the radix tree has better scalability than the bitmap.

Compared with a monolithic kernel, IPC performance overheads of a microkernel still mainly result from software intervention. To eliminate the overheads, the solution provided in this embodiment directly supports an inter-process call in hardware. Based on the foregoing design of the XPC engine, the hardware layer provides two instructions for the user mode: *xcall* and *xret,* which are respectively used as a call instruction and a return instruction for the inter-process call. *xcall* is used for completing permission checking, a skip logic, and the like at the hardware layer, and *xret* is used for returning to a previous process environment by using the stack (the foregoing *link stack)* maintained by hardware.

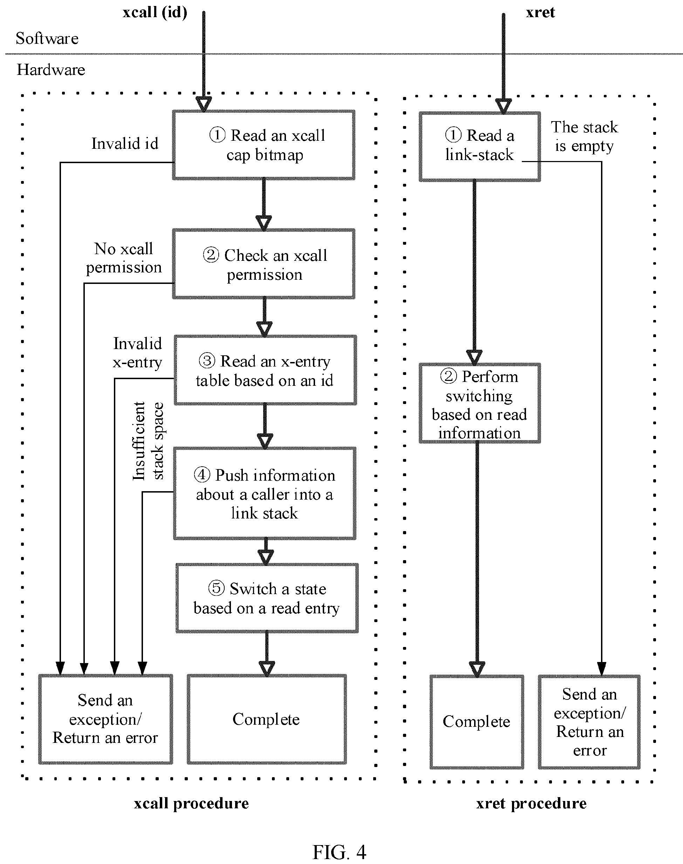

The following describes functions of *xcall* and *xret* in detail with reference to FIG. 4. The functions of the two instructions are implemented by a hardware circuit in the XPC logic. In another embodiment, *xcall* and *xret* may alternatively be partially implemented by the hardware circuit and partially implemented by a software program, or entirely implemented by the software program.

*xcall* mainly includes five steps shown in the figure.

□ The caller sends an id of the callee when using *xcall,* where a corresponding bit is obtained from the *xcall-cap bitmap* based on the id.

□ Check an *xcall* permission. If a value of the obtained bit is 1, it indicates that there is a permission for switching. If the value of the bit is 0, it indicates that there is no permission, and an exception is triggered or an error is returned.

□ Read an entry corresponding to the id from the *x-entry table* after the permission checking succeeds. In another embodiment, this step may alternatively be performed after □ and performed together with □.

□ Write a current page table pointer, capability, return address, and relay segment into the *link stack,* and set the valid bit to 1. The page table pointer refers to a value in a page table register, the relay segment refers to a value in a relay segment register, the capability refers to a value in the *xcall-cap-reg,* and the return address refers to an address of a next instruction in a program counter (program counter, PC). Because context switching is not performed currently, all the foregoing information may be considered as information about the caller. The relay segment register is described in detail in subsequent embodiments.

In some other embodiments, step □ may be implemented in an asynchronous manner, for example, a Linux non blocking (non blocking) manner, so that hardware does not need to wait for completion of this step before performing a next step. This further reduces a switching time.

□ Modify the page table register, the PC, and the like to the corresponding entry read from the *x-entry table* in step □. Specifically, the value in the page table register is modified to a value of the *page table pointer,* the PC is set to a value of the *entry address,* and the like. In this way, switching from a context of the caller to a context of the callee is implemented.

In the foregoing process, in addition to the aforementioned permission checking, id validity, *x-entry* validity, and whether a space of the *link stack* is sufficient may also be checked, and the like. An exception is triggered or an error is returned when invalidity occurs or the space is insufficient. These checking measures may be selectively executed depending on an actual situation for execution, and these checking measures may not be executed, may be entirely executed, or may be partially executed. This is not limited in this application. The generated exception or error may be reported to the kernel for processing.

In some other embodiments, the solution provided in this application may be designed to further include a cache (cache) configured to prefetch an *x-entry,* considering that for each caller, especially when the caller is a thread, IPC has high temporal locality (temporal locality); and that IPC is predictable. In view of this, in this application, a software-manageable cache may be designed for the XPC engine, and the cache is used for storing one or more x-*entries.* Based on this design, a user-mode application may store some *x-entries* into the cache in advance, to further shorten IPC communication duration.

xret mainly includes two steps shown in the figure. During *xcall,* the information about of the caller is recorded in the *link stack.* During xret, the information is read from the top of the *link stack* (□). The page table pointer, the capability, the entry address, and the like are modified to the information read from the *link stack* (□)*,* so that the context of the caller is restored.

The foregoing process may further include: checking whether the *link stack* is empty, checking a valid bit read from the *link stack,* checking whether a current relay segment register matches a value recorded in the *link stack,* and the like. If the *link stack* is empty, the valid bit indicates invalidity, or the current relay segment register does not match the value recorded in the *link stack,* an exception is triggered or an error is returned. These checking measures may be selectively executed depending on an actual situation, and these checking measures may not be executed, may be entirely executed, or may be partially executed. This is not limited in this application. The generated exception or error may be reported to the kernel for processing.

Because page table switching may still be performed when context switching is performed by using *xcall* and *xret,* in some other embodiments, a tagged (tagged) translation lookaside buffer (Translation Lookaside Buffer, TLB) mechanism may be introduced based on this embodiment. By using this mechanism, a refresh operation performed on a TLB during page table switching can be effectively avoided, thereby further improving performance of the *xcall* and *xret* instructions. For the tagged TLB, specifically, each TLB entry has an ASID, and the ASID is used for indicating a specific process to which the TLB entry belongs. By using the method, the TLB does not need to be entirely refreshed during inter-process context switching.

It should be noted that, in some other embodiments, a shared memory mechanism, instead of the relay segment memory mechanism provided in this application, may be used. If the relay segment memory mechanism is not used, content related to the relay segment does not need to be considered in the *xcall* or *xret* process. For example, if the shared memory mechanism is used, the caller and callee may use a shared memory interface. For implementation of the shared memory, refer to the conventional technology. Details are not described in this application.

From a perspective of software, a series of configurable registers are exposed to the kernel based on the foregoing XPC engine in terms of hardware, and two instructions *xcall* and *xret* are provided for context switching. Based on this design, the user-mode application can complete context switching without trapping into the kernel mode, thereby improving context switching efficiency and IPC efficiency.

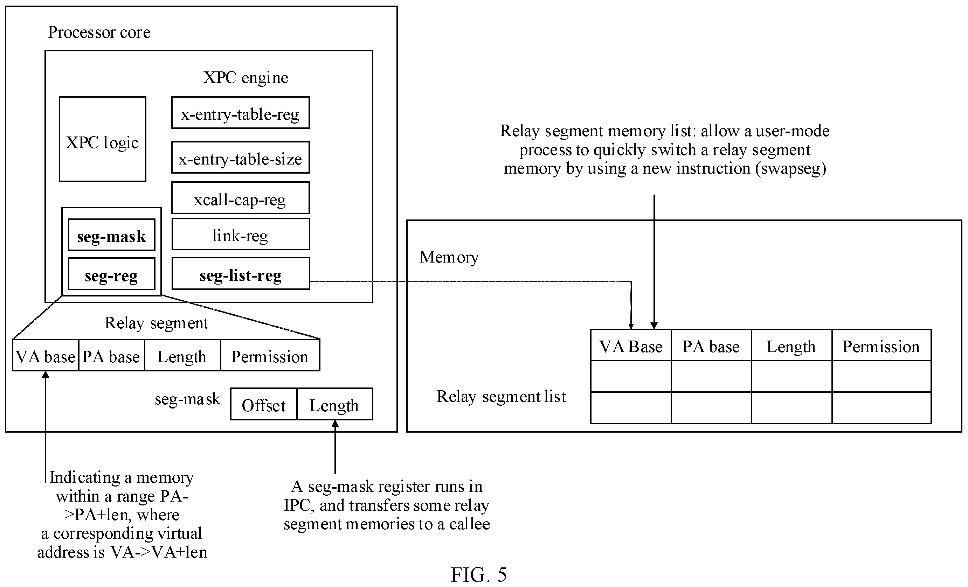

Further, the hardware provided in this application further supports zero-copy IPC data transmission, and can also ensure security of data transmission. As shown in FIG. 5, the XPC engine further includes three registers: a relay segment register *seg-reg,* a relay segment selector *seg-mask,* and a relay segment list register *seg-list-reg.* The *seg-reg* represents mapping between a segment of virtual memory and a segment of physical memory. During IPC switching, an intersection between memory ranges stored in the *seg-reg* and the *seg-mask* is used as a relay segment memory accessible by the callee.

The *seg-reg* includes four pieces of information: a virtual memory base address VA base, a physical memory base address PA base, a length length, and a permission permission. The relay segment memory corresponds to a memory that starts from the VA base and has a length of the length. The physical memory corresponding to this segment of virtual memory is specified by the PA base and the length. The permission may include invalid, read, write, and execution permissions, and the like. During address translation, the *seg-reg* has a higher priority over an existing page table.

The *seg-mask* includes two pieces of information: an offset (offset) and a length (length). When the *xcall* is executed for switching, hardware updates the base address and the length in the *seg-reg* based on the information in the *seg-mask.* An application cannot directly change the mapping in the *seg-reg,* but may use the *seg-mask* to narrow down a range of the current relay segment memory and then transfer the reduced relay segment memory to the callee. This capability is useful when some data cannot be transmitted, especially when a plurality of subjects form a calling chain. For example, A calls B, B calls C, and some of data of A cannot be transferred to B or C. In this case, a part of the relay segment can be transferred to B by using the *seg-mask.*

To enable the application to use more memories as relay segment memories, this embodiment further provides a register *seg-list-reg.* The register stores a physical address, and the physical address points to a data structure in a memory, namely, a table *relay segment list* in the figure. Each row of this table includes a piece of information in the *seg-reg.* Like the *seg-reg,* information included in each row in the *seg-list-reg* also points to a relay segment memory. Therefore, the *seg-list-reg* may store address information of one or more relay segment memories. In this way, the application may create a plurality of relay segment memories, and switch between the relay segment memories when necessary, so that the relay segment memories can be used more flexibly.

Further, to implement switching between the relay segment memories without trapping into the kernel mode, this embodiment further provides a new instruction: *swapseg.* For example, when the instruction is called by a user-mode process, the hardware layer may atomically switch content in the *seg-reg* and a row in the *relay segment list,* to implement switching between the relay segment memories. In another example, *swapseg* may be further used for atomically switching content in two relay segment registers, or replace an address in the relay segment register with an address, or the like. It should be noted that, the *relay segment list* may be stored in a private memory space of a process or a thread that creates the *relay segment list,* and is managed by the kernel.

It should be noted that, not all the three registers are mandatory. For example, in some cases, either or both of the *seg-mask* and the *seg-list-reg* may not be set.

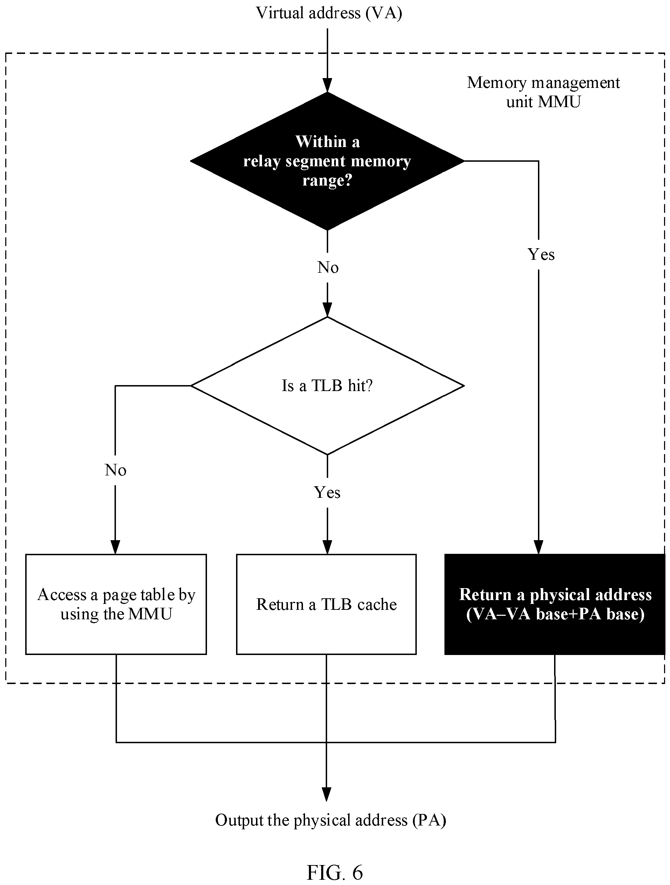

This embodiment further extends a memory management unit (memory management unit, MMU), as shown in FIG. 6. Conventional translation (which may also be referred to as mapping) from a virtual address to a physical address is processed by using the MMU and a translation lookaside buffer (Translation Lookaside Buffer, TLB) inside the MMU, namely, white parts in the figure. The extension of this embodiment lies in procedures shown in black parts in the figure. When obtaining a virtual address (VA) that needs to be translated, the MMU first determines whether the VA falls within a range of the relay segment memory. If the VA falls within the range of the relay segment memory, the MMU directly performs translation by using the memory mapping indicated by the foregoing *seg-reg,* and outputs a corresponding physical address PA. Specifically, PA=VA-VA base+PA base (refer to FIG. 5). If the VA falls beyond the range of the relay segment memory, the previous TLB and MMU are used for address translation.

It should be noted that, access to the register *seg-reg* by the MMU may be implemented through a hardware line, and the XPC engine may transfer a value in the *seg-reg* register to the MMU through the line. In another embodiment, another manner may be used. This is not limited in this application.

To prevent a TOCTTOU attack, the kernel ensures that each relay segment memory can be used by only one core at a time. That is, the relay segment memory can belong to only one thread at a time. The ownership is transferred along the calling chain. For example, if A calls B, and B calls C, the relay segment memory is transferred from A to B and then to C. The relay segment memory may be entirely or partially transferred.

In the *xret* phase, the XPC engine may also check whether the value in the *seg-reg* is consistent with the intersection that is between the *seg-reg* and the *seg-mask* and that is stored in the *link stack.* If the value in the *seg-reg* is inconsistent with the intersection that is between the *seg-reg* and the *seg-mask* and that is stored in the *link stack,* an exception or an error is triggered, to be processed by the kernel. If the value in the *seg-reg* is consistent with the intersection that is between the *seg-reg* and the *seg-mask* and that is stored in the *link stack,* execution continues. This can prevent a malicious callee from modifying the relay segment memory of the caller.

The foregoing mainly describes the hardware design of this embodiment. Generally, the foregoing design provides an application with a direct and kernel-intervention-free context switching capability and a capability checking capability based on the XPC engine, and a secure and zero-copy data transmission capability based on the relay segment memory.

From the perspective of software, the design of the hardware layer provides new hardware primitives (primitive) for the software layer, including a context switching primitive, a relay segment memory primitive, and the like. The context switching primitive includes two new instructions: *xcall* and *xret.* The relay segment memory primitive includes a new instruction *swapseg.* It should be noted that, the primitive in this embodiment refers to a process of completing a specific function, and is indivisible. A hardware primitive is a primitive implemented by using the hardware layer. In another embodiment, the solution provided in this application may alternatively not be implemented by using a primitive, and a particular degree of function division may be accepted.

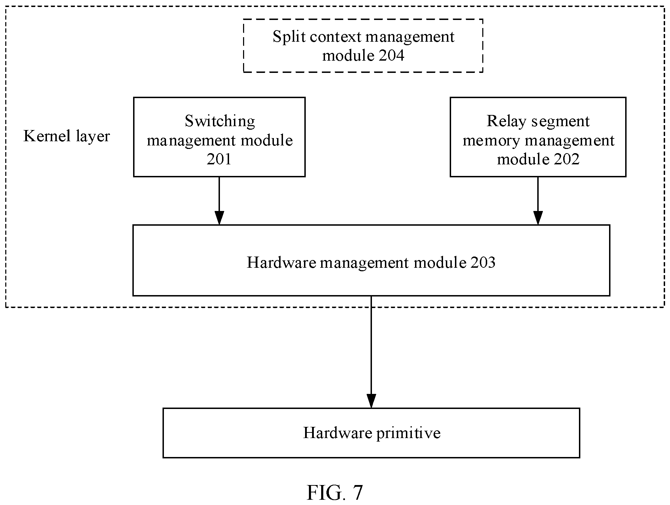

The following describes a software design of the XPC solution provided in this embodiment. FIG. 7 is a schematic diagram of software modules included in an operating system kernel according to this embodiment.

The hardware management module 203, the switching management module 201, and the relay segment memory management module 202 are offline configuration modules, and the split context management module 204 is a runtime module. The hardware management module 203 directly operates the new hardware primitives provided in this embodiment. The switching management module 201 and the relay segment memory management module 202 respectively provide, in the kernel based on the hardware primitives, a context switching configuration and a data transmission configuration, including security and policy configurations, and the like. The switching management module 201 and the relay segment memory management module 202 manipulate the hardware depending on the hardware management module 203. The three modules all hardware-configured, and therefore are positioned as offline configuration modules. The split context management module 204 is responsible for state maintenance and IPC information maintenance during running of a thread or a process. It should be noted that, the foregoing module division is merely an example, and not all the modules are mandatory. A person of ordinary skill in the art may classify the software modules in another manner. This is not limited in this application.

The following separately describes in detail the split context management module 204, the switching management module 201, and the relay segment memory management module 202. The hardware management module 203 is management code that is in the kernel and that is responsible for the foregoing XPC engine, and may be understood as a driver. Implementation of this part is similar to existing hardware management. Details are not described in this application.

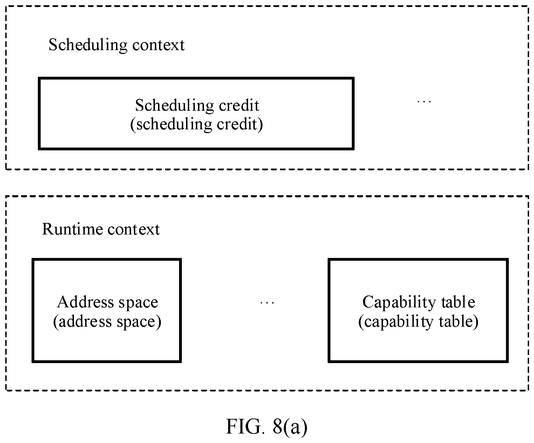

A thread model in conventional IPC includes all thread contexts together. A thread (process) context refers to various states of a thread, and usually includes a general-purpose register, a page table, a thread private space, and thread metadata that are used by the thread. This thread model can work in conventional kernel-centric IPC communication. However, in the solution of direct context switching in the user mode provided in this application, the conventional thread model may cause the kernel to fail to identify a current user-mode thread. Therefore, this embodiment provides a "split context model". As shown in FIG. 8(a), a conventional thread context is abstracted into a runtime context and a scheduling context. The runtime context allows switching in the user mode by using the XPC engine, and the scheduling context is maintained only by the kernel. The split context model can extend the existing kernel thread model to enable the kernel thread model to support an exception and a system call of a user-mode process in XPC.

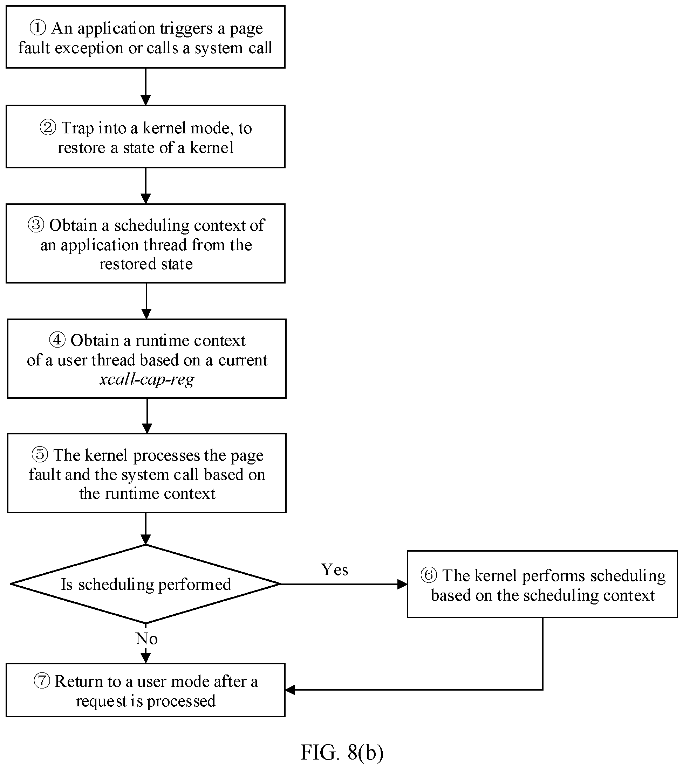

In the split context model, the kernel determines the runtime context of the current thread by using an additional register (such as the *xcall-cap-reg),* and determines the scheduling context by using a state maintained by the kernel. This split management manner provides higher flexibility and allows the user-mode process to reuse a scheduling context and support different runtime contexts. FIG. 8(b) shows an application process of the split context model. The user-mode process triggers an exception (for example, a page fault exception) or calls a system call and traps into the kernel mode (□). In the kernel, the kernel first restores a context of the kernel, such as a stack of the kernel (□). The kernel obtains a scheduling context of the thread from the restored state (□). The kernel obtains a runtime context of the user-mode thread from a current hardware state (that is, *xcall-cap-reg).* The kernel processes the exception or the system call based on the runtime context, for example, processes the page fault exception by using a page table in the runtime context or processes the system call by using a capability table in the runtime context (□). When the operating system performs scheduling, the kernel performs scheduling based on the scheduling context (for example, time slice information) (□). After the request is processed, return to a user mode (□). For a scheduling policy and a scheduling process of the operating system, refer to the conventional technology. This is not limited in this application. The split context model extends context management of the existing kernel.

It should be noted that, in this embodiment, the *xcall-cap-reg* is unique for each thread, and therefore, the *xcall-cap-reg* may function as an index to position a runtime context of a thread. Specifically, for example, another memory page may be allocated near a memory of the *xcall-cap-reg,* to record the runtime context of the thread, for example, a page table base address. Then, the kernel directly accesses, based on the *xcall-cap-reg,* the runtime context recorded in the memory page. In another embodiment, the kernel may obtain the runtime context by using another register or in another manner.

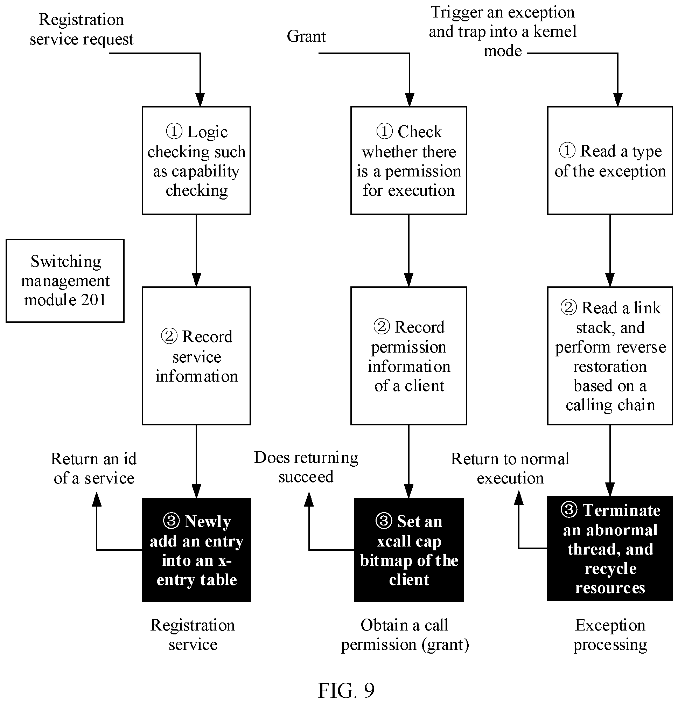

The switching management module 201 needs to process hardware, and needs to be supported by a hardware primitive provided by the XPC engine. As shown in FIG. 9, the switching management module 201 is mainly configured to implement three procedures: service registration, call grant, and exception processing. Steps in black background in the figure are core related processes of the solution provided in this application.

An application, as a server, first registers its service through an interface provided by the kernel before providing the service: □ The kernel checks a registration request to determine whether the registration request is valid; □ the kernel then records service information into the kernel; and □ the kernel converts the service information into an *x-entry,* including information such as a page table and an entry address of the server (refer to the foregoing description of the *x-entry table),* and adds the *x-entry* to the *x-entry table* through an interface provided by the hardware management module 203. Finally, the kernel returns an id to a user, to indicate an index location of the corresponding service in the *x-entry table,* where the id may be used as an identifier of the server for use by the caller.

An application, as a client, needs to be authorized by the kernel before obtaining a service. Implementation of the authorization includes: □ The kernel first checks whether a call permission that is of a service and that is obtained by the client in various manners is valid; □ the kernel updates IPC call permission information of the client; and □ the kernel sets a corresponding bit in the *xcall-cap bitmap* corresponding to the client to 1, to indicate that the client is allowed to directly call the corresponding service (refer to the foregoing description of the *xcall-cap bitmap).* For security, a plurality of security policies may be set in the kernel part, and whether a permission can be granted is determined according to the security policies. The security policies are not limited in this application.

During an IPC call, a user-mode program may trigger an exception or an error, and the kernel needs to process the exception or error in the IPC process: □ The kernel obtains a type of the exception, to determine whether the exception is an IPC-related exception; □ the kernel obtains information about a current IPC calling chain by reading information from the *link stack* when the exception is triggered, and restores a state on the IPC calling chain based on the information; and □ the kernel terminates an abnormal thread and revokes related resources.

It should be noted that, steps (for example, steps in white background) in the three procedures provided in FIG. 9 are the same as or similar to configurations or exception processing of IPC communication of the existing microkernel. Therefore, details are not described in this application. However, the three procedures provided in FIG. 9 are merely examples, and may vary depending on actual requirements, or may vary depending on different types of system kernels. Therefore, the procedures shown in FIG. 9 should not be understood as any limitation on this application.

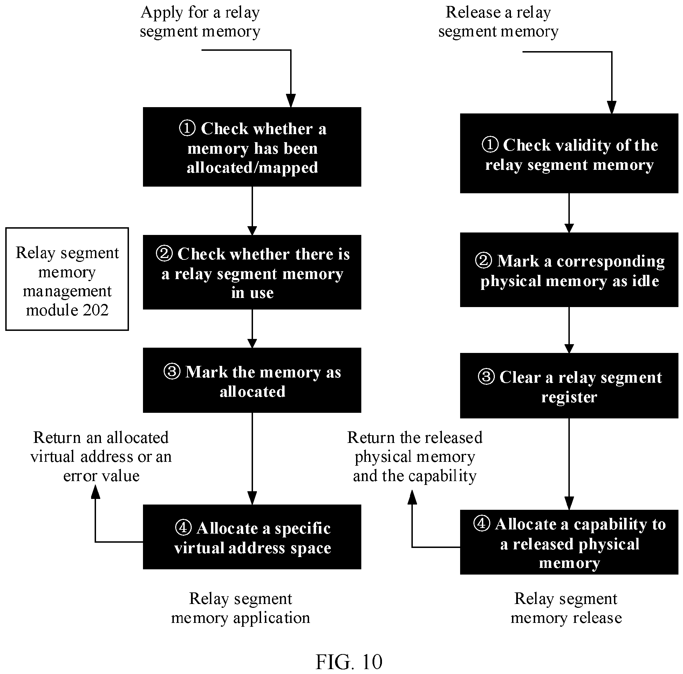

As shown in FIG. 10, the relay segment memory management module 202 mainly implements two functions: application and release of a relay segment memory, and exposes interfaces for implementing the two functions to the application layer.

The application for the relay segment memory includes: □ The kernel checks whether a physical memory has been allocated/mapped, to ensure that a newly allocated relay segment memory does not exist in another existing relay segment memory and user-mode memory; □ the kernel checks whether there is a relay segment memory in use currently, to avoid memory leakage caused by overwriting; □ after the first two check items meet requirements, the kernel marks the physical memory segment as a state of "allocated relay segment"; and □ the kernel allocates a virtual memory space, and writes the segment of physical memory and a virtual memory into the relay segment register *seg-reg.* Finally, the kernel returns an address of the allocated virtual memory. If there is an exception such as a checking failure or memory insufficiency during the application, an error value is returned.

To avoid overlap between the relay segment memory and a common memory, the virtual memory allocated in step □ is allocated within a specific range, where this range is used for mapping only the relay segment memory rather than the common memory. The common memory herein refers to a memory other than the relay segment memory provided in this application.

The release of the relay segment memory includes: □ The kernel checks validity of the relay segment memory; □ if a checking result is validity, the kernel releases a corresponding physical memory and marks the physical memory as idle; □ the kernel clears the relay segment register *seg-reg;* and □ the kernel allocates a capability (or referred to as a permission) to the released physical memory. Finally, the kernel returns the released physical memory and the capability of the released physical memory.

In the solution provided in this embodiment, uniqueness of the relay segment memory may be implemented by maintaining ownership transfer (ownership transfer) of the relay segment memory. When a relay segment memory is allocated, the relay segment memory can be used only by a corresponding thread, and even other threads of a same process cannot access the memory. Therefore, a TOCTTOU attack can be effectively avoided.

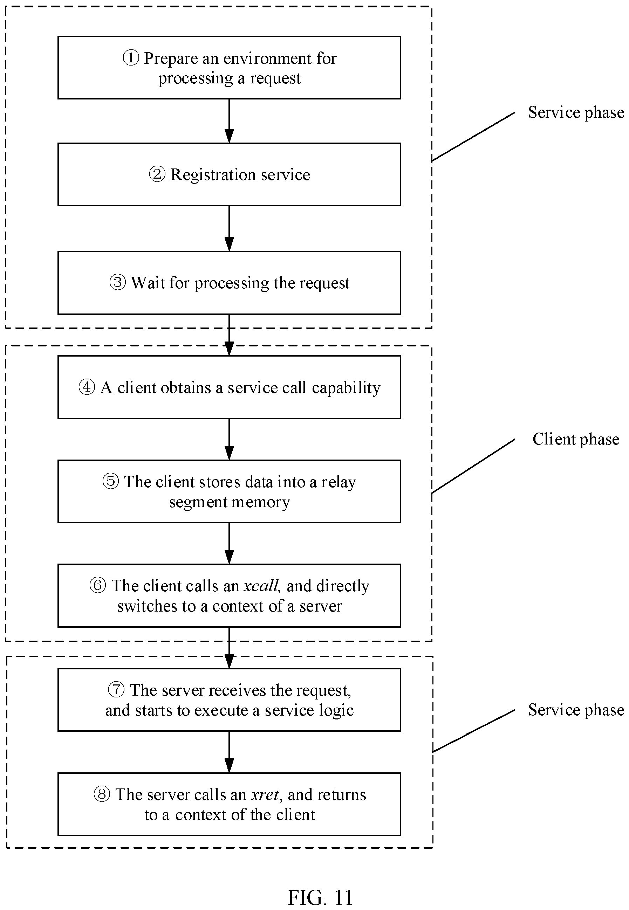

An inter-process communication procedure of the solution provided in this embodiment is shown in FIG. 11, and mainly includes three phases. The first phase is a service phase. □ The server initializes its running environment, to ensure that the server is in a state in which a request can be accepted. □ The server registers an IPC service, including configuring an IPC service port in the microkernel and setting, by the microkernel, a state of hardware. For specific implementation of the registration process, refer to the implementation of service registration in the IPC management module. □ The server starts to enter a state of waiting for processing the request. The second phase is a client phase. □ The client obtains a service call capability. For how to obtain the service call capability, refer to the implementation of call grant in the switching management module 201. □ The client stores data into the relay segment memory. Before this, the relay segment memory is applied for. For an application method, refer to FIG. 10. □ The client calls *xcall* for the IPC call. The third phase is a service phase. □ The *xcall* command is executed by the XPC engine, to implement switching from a client process to a service process. Then, the server obtains the data of the client by using the relay segment memory and starts to execute a service logic. □ After processing the request, the server sends a service result to the client by using the *xret* command. After IPC is completed, the client may release the relay segment memory. For a release method, refer to FIG. 10.

In the foregoing step □, the XPC engine may check whether the client has a permission to perform a call operation. If the checking fails, an exception is triggered. If the checking succeeds, a context of the service is switched to, and the relay segment memory is also transferred to the server in a register manner.

In another embodiment, an execution sequence of steps □ to □ may be adjusted as required. For example, a sequence of the foregoing step □ and the other steps may be adjusted. Specifically, the client may apply for the relay segment memory earlier, or the application for the relay segment memory and data storage may both be implemented earlier.

It should be noted that, for more detailed implementations included in the foregoing steps, for example, implementations of *xcall* or *xret,* capability grant, and the application and release of the relay segment memory, refer to the foregoing descriptions.

In this embodiment, software and hardware are combined. Software is responsible for ensuring a security mechanism, and hardware is responsible for accelerating switching during running, to implement rapid switching and secure zero-copy data transmission. Software (kernel) maintains uniqueness of the relay segment memory and security of the virtual address. Hardware provides handover-typed data handover of registers during running, to implement secure zero-copy data transmission.

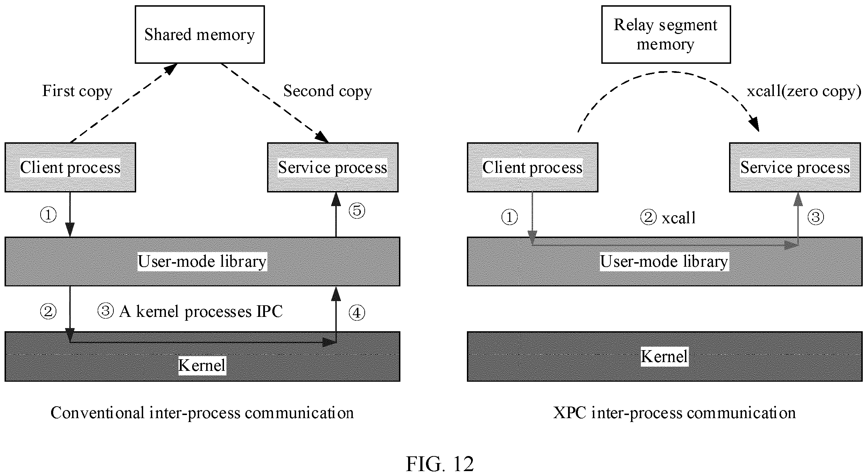

FIG. 12 shows a comparison between a process of this embodiment and conventional IPC. The conventional IPC depends on the kernel for inter-process communication (□ to □), including overheads such as running mode switching, cache pollution, permission checking, context switching, address space switching, and kernel checking logic complexity. The conventional IPC includes at least two copy processes during data transmission, and has a risk of a TOCTTOU attack. However, in the solution provided in this application, permission checking, context switching, and the like are implemented by hardware by calling *xcall,* thereby successfully bypassing the kernel (□ to □) and avoiding overheads caused by trapping into the kernel mode. In addition, hardware provides a handover-typed data transmission mechanism of registers, to avoid data copying, thereby achieving better IPC communication performance.

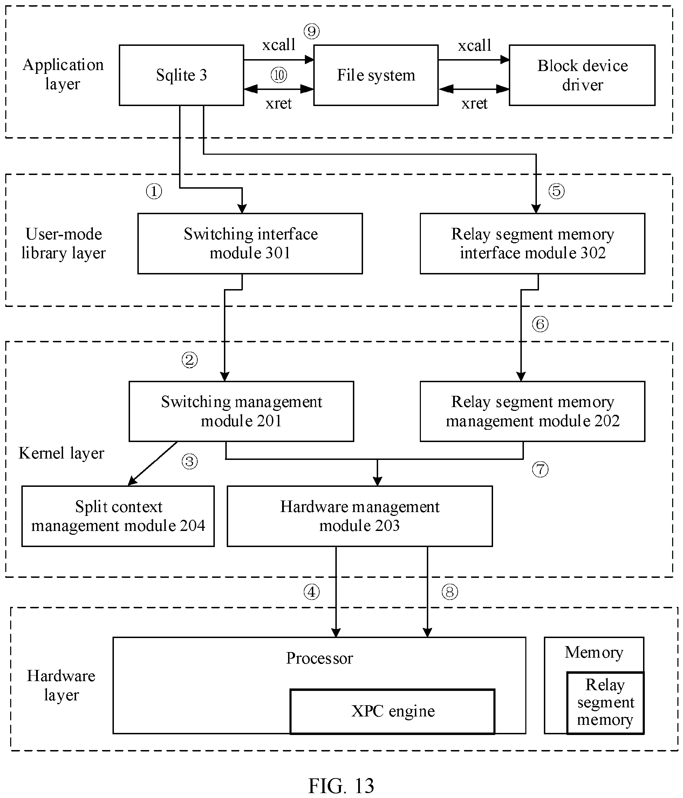

FIG. 13 is a process in which an Sqlite 3 database application accesses, by applying the solution provided in this application, data stored in a storage medium. In this embodiment, the hardware layer extends the XPC engine and the relay segment memory, and a kernel Zircon of a Google Fuchsia system is used. An application is Sqlite 3, a file system is xv6fs, and a virtual memory disk ramdisk is used as a storable device. Sequence numbers in the figure list only operations related to an Sqlite 3 process.

A file system process and a block device driver process register services. Specifically, the file system process and the block device driver process first execute an initialization logic in a boot phase of the operating system to initialize their programs, and separately register their IPC services through interfaces provided by the kernel.

A communication channel is established between the file system process and the block device driver process. Specifically, the file system process needs to access a real device by using the block device driver process. Therefore, during initialization, the communication channel between the file system process and the block device driver process is established, to allow the file system process to call a service of the block device driver process.

A communication channel is established between the Sqlite 3 database process and the file system process (sequence numbers □ □ □ □ in the figure). Specifically, the Sqlite 3 database process is started. A call permission for the file system process is granted to the Sqlite 3 process during initialization, and a communication link between the Sqlite 3 process and the file system process is established.

Sqlite 3 prepares data for communication with the file system process (sequence numbers □ □ □ □ in the figure). Specifically, Sqlite 3 prepares the data by using a relay segment register. A write (write) operation is used as an example. Sqlite 3 uses a relay segment memory as its data memory. At a write interface, a transitive relay segment memory is limited within data access of a write request by using the relay segment selection register *seg-mask.*

Sqlite 3 calls a file system service (a sequence number □ in the figure). Specifically, Sqlite 3 prepares to access the file system service, and directly switches to a context of the file system process by calling the *xcall* command provided by the user-mode library. *xcall* of Sqlite 3 enters an entry point of the context of the file system. At this entry point, the file system service allocates a resource and then performs a write operation within the file system. During the write operation, there may be a process of calling the block device driver process, which is similar to a process of calling the file system process by Sqlite 3, and details are not described again.

The file system process returns a result to Sqlite 3 by using *xret* (a sequence number □ in the figure). Specifically, the file system returns an execution result to the Sqlite 3 database process by using a register.

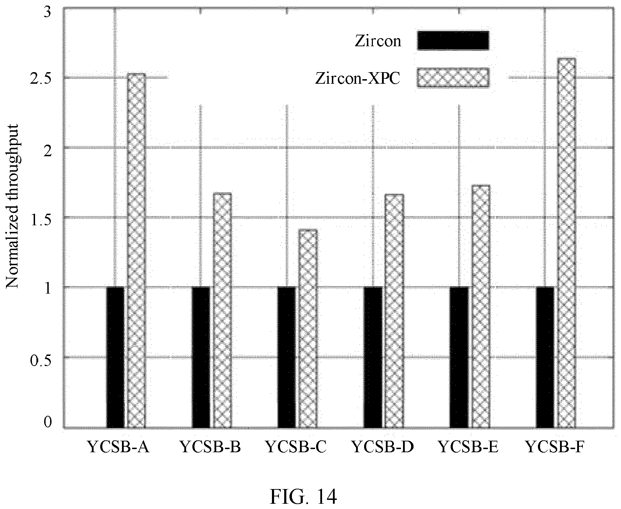

The Sqlite 3 program process is tested by using a YCSB (Yahoo! Cloud Serving Benchmark) test set (A to F). As shown in FIG. 14, compared with a solution that is not optimized by using this application, an optimized version can achieve performance improvement of up to more than 2.5 times in terms of throughput.

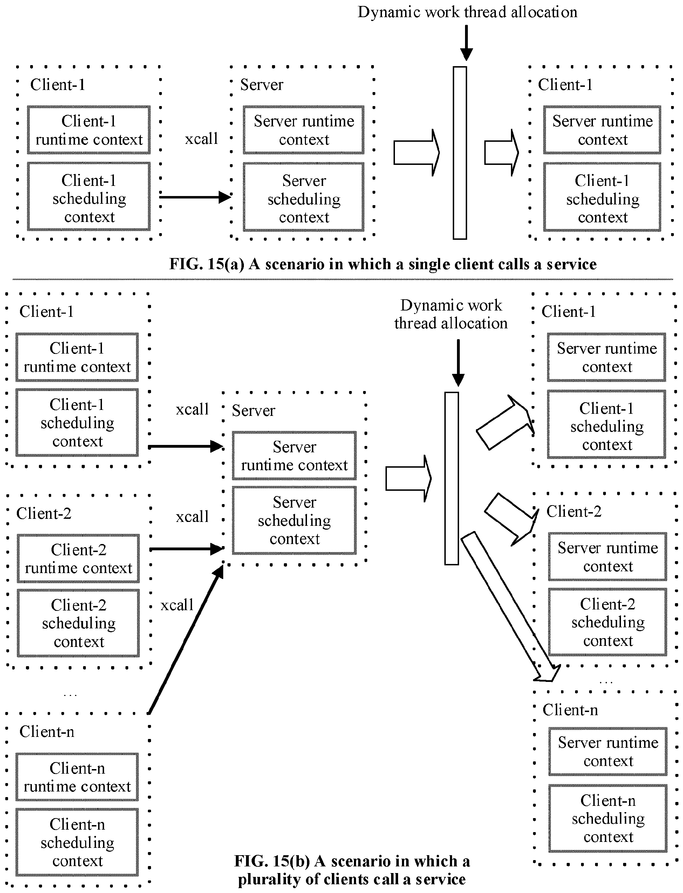

The solution provided in this application can further support dynamically extending a service thread. FIG. 15(a) and FIG. 15(b) are schematic diagrams of dynamically extending a service thread. The solution provided in this application allows the server to create a new work thread (work thread) as required. As shown in FIG. 15(a) and FIG. 15(b), the client calls IPC by using the instruction *xcall* provided by the XPC engine. The server determines, by using a dynamic allocation component, whether a new thread resource needs to be allocated. As shown in FIG. 15(a), when only one client calls the service, the dynamic allocation component only needs to create a service running context resource required by one work thread. As shown in FIG. 15(b), when a plurality of clients call the service at the same time, the dynamic allocation component creates a service running context resource required by a plurality of work threads. In this embodiment, a server processing thread resource does not need to be statically allocated, and a scheduling context resource of a blocked (block) client thread may be reused, to improve system resource utilization.

As shown in FIG. 15(a) and FIG. 15(b), due to a split context mechanism, in this application, code of the server may be run in the scheduling context of the client. Therefore, inter-processor interaction can be changed into single-core interaction, to avoid overheads such as inter-processor interrupts of the inter-processor interaction.

It should be noted that, an IPC mechanism is not only an inter-process communication mechanism of the microkernel, but also is used in the monolithic kernel for IPC inter-process communication. The solution provided in this application is not only applicable to the microkernel but also applicable to the monolithic kernel.

The following describes a specific RocketChip-based implementation of the solution provided in this application. The solution provided in this application is integrated into a RocketChip RISC-V core, and support a microkernel, a monolithic kernel, and a user-level data handover (handover) mechanism.

The XPC engine is implemented as a unit of the RocketChip core. Table 1 shows detailed information of new registers and new instructions. These new registers are implemented by using control and status registers (control and status register, CSR), and can be accessed by a csrr (CSR read) instruction and a csrw (CSR write) instruction. Three new instructions: *xcall, xret,* and *swapseg,* are sent to the XPC engine in an execution phase. The XPC engine checks IPC validity and returns information about the callee to a pipeline (pipeline). In addition, five new exceptions are added: an invalid x-entry, an invalid xcall-cap, an invalid linkage (linkage), an invalid seg-mask, and a swap-seg error.

**Table 1**

| **Names of registers** | **Access permission (read/write permission in a kernel by default)** | **Lengths of registers** | **Descriptions** |
|---|---|---|---|
| x-entry-table-reg | | Consistent with a length of a virtual address | Including an address of an x-entry-table |
| x-entry-table-size | | 64 bits | Controlling a size of the x-entry-table |
| xcall-cap-reg | | Consistent with the length of the virtual address | Including an address of an xcall-cap bitmap |
| link-reg | | Consistent with the length of the virtual address | Including an address of a link stack |
| seg-reg | Write in a user mode | 3*64 bits | Including a mapping and a permission of a relay segment |
| seg-mask | Read and write in the user mode | 2*64 bits | Mask (mask) of the relay segment described in the seg-reg |
| seg-list-reg | Read in the user mode | Consistent with the length of the virtual address | Including an address of a relay segment list |
| | | | |

| **Instructions** | **Execute permissions** | **Instruction formats** | **Descriptions** |
|---|---|---|---|
| xcall | User mode | xcall#register | Switching a page table base register, a PC, and the xcall-cap-reg, and storing information about a caller into the link stack |
| xret | User mode | xret | Returning to a context of the caller |
| swapseg | User mode | swapseg#register | Swapping the current seg-reg with a relay segment memory in the relay segment list, and clearing the seg-mask |
| | | | |

| **Exceptions** | **False instructions** | **Descriptions** | |
|---|---|---|---|
| Invalid x-entry | xcall | Calling an invalid x-entry | |
| Invalid xcall-cap | xcall | Calling an x-entry without an xcall-cap | |
| Invalid linkage | Xret | Returning to an invalid linkage record | |
| Switching error | swapseg | Swapping an invalid entry from the relay segment list | |
| Invalid seg-mask | csrw seg-mask, #reg | Masked segment is out of a range of the seg-reg | |

The kernel manages four XPC objects: (1) a global x-entry table; (2) a link stack corresponding to each thread (per_thread link stack); (3) an xcall capability bitmap corresponding to each thread (per_thread xcall capability bitmap); and (4) a relay segment list corresponding to each address space (per_address_space relay segment list). In a system boot (boot) phase, the kernel allocates a memory for the x-entry table and sets a size of the table. When a thread is created, the kernel allocates a memory of 8 KB to the link stack of the thread, allocates a memory of 128 B to the xcall capability bitmap of the thread, and allocates a page of 4 KB to the relay segment list of the thread. During a context switchover, the kernel is responsible for storing and restoring the foregoing objects (2) and (3).

Support for microkernels is described from the following four aspects. Mutual reference may be made between the following descriptions and the foregoing descriptions in this application.
**1. Capability (capability).** The capability is widely used in a microkernel IPC mechanism. An interface grant-cap is introduced into the solution provided in this application, and the interface allows one thread to grant a capability to another thread. The kernel maintains a capability list for each thread. When a thread creates an x-entry, the thread grants the corresponding xcall-cap to another thread by using the grant-cap.
**2. Split thread state or split context.** Because the kernel is unaware of a current running thread, user-mode domain switching may lead to a misbehavior of the kernel. For example, A calls B by using *xcall,* but a page fault (page fault, also referred to as a page fault exception) is triggered, and the operating system traps into the kernel mode. However, the kernel mistakenly uses a page table of A to process the page fault of B.
   To resolve this problem, a thread state maintained by the kernel is split into two parts: a scheduling state and a runtime state. The scheduling state includes scheduling-related information, and specifically includes a kernel stack, a priority (priority), a time slice (time slice), and the like. The runtime state includes a current address space and current capabilities. Each thread may be associated with one scheduling state and one or more runtime states. Because the *xcall-cap-reg* corresponds to each thread, and may be updated during xcall, the kernel may determine the runtime state by using the *xcall-cap-reg.* When a thread traps into the kernel mode, the kernel may determine a current runtime state of the thread based on a value in the *xcall-cap-reg,* to avoid the error in the foregoing example.
**3. Call by a plurality of clients at the same time.** The solution provided in this application supports one x-entry to be called by a plurality of clients at the same time. To achieve this objective, each x-entry corresponds to a plurality of XPC contexts, and the XPC context includes an execution stack and local data. When an x-entry is created, the server sets a maximum quantity of XPC contexts. These XPC contexts may be created in advance. Before the x-entry is called, an idle XPC context is selected. Then, switch to a corresponding execution stack and restore local data, and release a resource before return. If there is no idle XPC context, return an error or continue to wait for an idle XPC context. Further, to prevent a DoS attack, the server may limit a call from the client by using a specific policy.
**4. Application termination.** An abnormal termination of a procedure in a calling chain may affect the entire calling chain. For example, if A calls B and B calls C, but B is killed (killed) by the kernel due to an exception, return to a wrong process when C calls xret. In this case, a manner is required to trigger an exception, so that the kernel processes the exception.

In this embodiment, when a process terminates, the kernel scans all link stacks, finds all linkage records of the process by using a page table pointer, and sets all the linkage records to be invalid. In this way, as in the previous example, when C returns, an exception of an invalid linkage is triggered, so that the kernel can process the exception.

Further, in this embodiment, a scanning frequency of the link stack may be further reduced. When B is killed, the kernel does not need to perform scanning, but zeros out a page table of B. In this way, when C returns, a page fault (page fault) is triggered. In this way, the kernel obtains an opportunity to process the error. In addition, the kernel also revokes (revoke) resources of B.

The solution provided in this application also supports the monolithic kernel. Specifically, the following describes a convergence solution of this application and an Android Binder mechanism.

Binder is an important feature introduced by Android in a Linux kernel and is mainly responsible for inter-process communication of applications on Android. Binder is widely used in existing Android services, such as window manager (window manager). An architecture of Binder includes a base layer, a Linux Binder driver, an Android Binder framework, and an API layer. In the solution provided in this application, only the driver and the framework are modified to support Binder, and it is ensured to the greatest extent that the API is not modified. In Binder, "binder transaction" is used for representing a cross-process method call that uses two copies of the kernel to implement data transmission. Another feature, namely, ashmem (anonymous shared memory) is introduced to Android, to accelerate big data transmission during Binder communication.

The binder transaction includes the following steps: 1. A client prepares a method identifier and places to-be-transferred parameter data into a Parcel structure in Android. 2. The client calls an API function transact() of the Binder framework. This function eventually traps into the binder driver of the kernel, which copies the data to a server through two copies. The entire process involves two data copies and two permission-level switchovers. 3. The binder framework of the server receives a request and calls an onTransact() callback function to call the corresponding method. 4. The server returns an execution result to the client by using the binder driver.

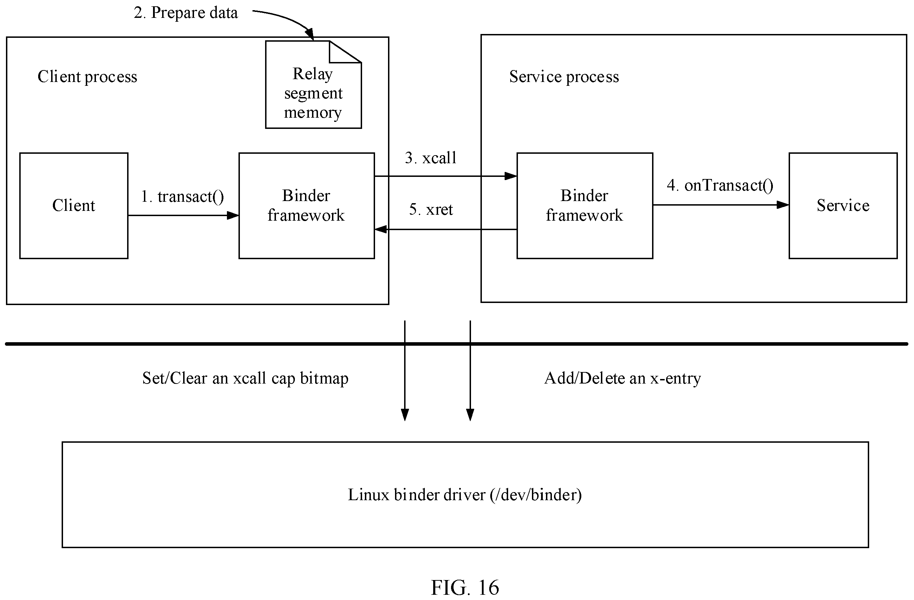

As shown in FIG. 16, the entire procedure is optimized by using the XPC solution. First, API interfaces, such as transact() (see 1 in the figure) and onTransact() (see 4 in the figure), do not need to be modified. This enables the XPC-optimized binder to be still compatible with existing applications. Second, the binder driver is extended to manage the *xcall cap bitmap* and *x-entry table.* When a process registers a service, the process needs to trap into the driver by using the framework, to configure the *x-entry table* to add an x-entry, where deleting an x-entry is performed in a similar manner. When the client obtains a service call permission, the client also needs to trap into the driver, to set the *xcall-cap bitmap* of the client, where a clearing operation is performed in a similar manner. Finally, when the client communicates with the server at runtime, different from a conventional binder method (trapping into the kernel mode by using ioctl), the client may directly call the *xcall* instruction to the server to complete the call (see 3 in the figure). After processing the request, the server may directly return to the client by using the *xret* instruction (see 5 in the figure). In addition, data transmission also changes from Parcel transmission to handover of relay segment memories (see 2 in the figure). In addition, Linux also needs to maintain related registers in a context of each thread. XPC-based optimization can avoid two permission-level switchovers and two data copies.

An anonymous shared memory (ashmem) is used by users by using a file-based shared memory interface. Specifically, a user process may allocate an fd, and a memory may be obtained by mapping (map) the fd. The fd may be shared between different processes in Binder to implement data transmission. Like a conventional shared memory, the ashmem also has a security problem. An additional copy is required to ensure data security.

XPC-based optimization includes three aspects. Ashmem allocation: The binder framework implements the ashmem by using a relay segment memory, and allocates a corresponding relay segment memory to a user during allocation. Ashmem mapping: During mapping, a mapped range of the ashmem is set in a corresponding relay segment register. Ashmem transmission: The relay segment memory is directly handed over to the server by using *xcall.*

An additional copy can be avoided by optimizing the ashmem by using the relay segment memory provided in this application. When the relay-seg-reg in the hardware is insufficient for mapping a plurality of ashmems, scheduling processing may be performed in a manner of triggering a page fault (page fault) and then dynamically mapping.

The solution provided in this application further supports cross-calling-chain data handover. In actual scenarios, a nested calling chain of a plurality of subjects is usually involved. For example, A calls B, and B calls C. Herein, data transferred from A to B may be directly transferred to C. The XPC relay segment mechanism can implement cross-function-calling-chain handover (handover). That is, data is transferred between A, B, and C in a zero-copy manner without a security problem.

Herein, three cases are mainly considered. In the first case, when B transfers data to C, some data needs to be added based on data of A. In the second case, B transfers only some data to C. In the third case, when C performs execution, B may exist due to an exception, and resources of B need to be revoked.

Data size negotiation (message size negotiation): For the first case, data size negotiation is used. To be specific, even if A transfers a small amount of data to B, if B needs to transfer a larger data block to C, A may reserve a range of this part of data, so that B can directly append (append) data to the reserved range without reallocating or transferring data. The negotiation herein depends on the calling chain. If B can call C or D later, a space that A needs to apply for should be the largest one of a size of the data sent by A to B, a size of the data sent by B to C, and a size of the data sent by B to D.

Data shrink (message shrink): For the second case, the range of the relay segment memory needs to be narrowed down. This can be implemented by using the register *seg-mask.* A range for transmission is selected by using the *seg-mask,* and an excessive part is not transferred to the server.

Relay segment revocation (segment revocation): For the third case, when a process terminates, the kernel traverses a relay segment list of the process, returns the relay segment memory of the caller to the caller, and revokes remaining relay segment memories.

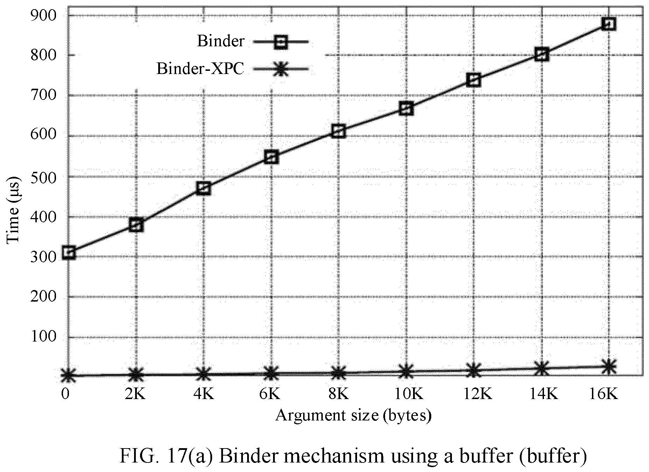

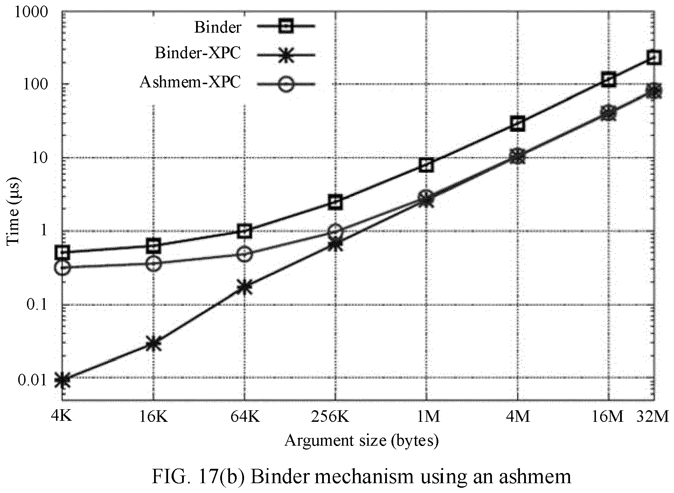

In this embodiment, two binder mechanisms are considered: a data handover mechanism by using a buffer (buffer) and a data handover mechanism by using an ashmem. In this embodiment, the two binder mechanisms are optimized based on XPC, and the communication time is compared, as shown in FIG. 17(a) and FIG. 17(b). The communication time herein includes data preparation (client), a remote method call and data transfer (framework), surface content (surface content) processing (server), and a reply (framework). It can be learned from the figure that, XPC can effectively optimize performance of Binder and the ashmem.

It should be noted that, the monolithic kernel may integrate only the relay segment memory mechanism provided by the XPC, and context switching uses an existing mechanism or another mechanism. This can also improve data transmission efficiency and security.

In conclusion, the solution provided in this application includes but is not limited to the following content.
I. In the design of a cross-process call of a context switching primitive supported by hardware, two new instructions xcall and xret are used for allowing the user mode to execute a context switching function.
   1. xcall and xret are parts that can be directly accelerated by hardware in the IPC process, and are mainly context switching between the client and server in IPC. Hardware support accelerates the core IPC procedure.
   2. Inter-processor interaction optimization mechanism: In a multi-core scenario, an original notification manner by using an inter-processor interrupt (Inter-processor interrupt) is replaced with a mechanism that pulls a service process to a current core for running. This manner may provide a better cache hit ratio of accessing data of the client process by the service process.
   3. A hardware cache is introduced to support acceleration: During the switching, the two instructions xcall and xret need to be implemented by accessing a memory for a plurality of times. The present invention adopts the hardware cache for IPC information, to store data that needs to be read by the xcall/xret instruction.
   4. Asynchronous data push into stacks: In an xcall process, hardware needs to push current context information of the client into a stack (link stack). This process may be completed asynchronously, to prevent hardware from synchronously waiting for completion of the operation of data push into stacks.
   5. A method for avoiding page table switching overheads by using a tagged TLB: When context switching is performed in hardware by using xcall and xret, page table switching is still required. By using the tagged TLB manner, a refresh operation on a TLB in page table switching can be avoided, and performance of the xcall and xret instructions is improved.
II. In the design of a data transmission mechanism supported by hardware, rapid zero-copy data transmission is allowed by using a relay segment memory and a handover manner of the relay segment memory in a register manner.
   1. Address translation and data transmission are performed in a register manner: An existing page table based address translation process is extended in a register manner is provided. This extension of register translation can ensure that the TLB is always hit, and changes big data transmission into a process of register handover.
   2. MMU-based extension avoids a significant change to a processor core: The relay segment memory is extended based on the MMU and the TLB. Excessive modifications to the processor core can be avoided.
III. In implementation of software (the kernel and the user-mode library) collaborated IPC context switching, a hardware extension based IPC interface is implemented by using a split thread context model and an IPC management module, to greatly improve performance of applications.
   1. Flexible security configuration solution provided by software: A hardware primitive provides only a basic switching function, but a security policy of the basic switching function is still maintained by kernel software. This splitting can ensure that the kernel can flexibly manage IPC, to achieve a same security level as the conventional solution.
   2. Hardware and the kernel jointly maintain a call stack mechanism: The hardware primitive records information about a calling chain into the call stack (link stack). The kernel may process an IPC exception mechanism through call stack tracing.
   3. States stored/restored by the user mode are determined based on a trust level: The hardware primitive is responsible for only the core context switching (such as the page table), and the user-mode register and the like are maintained by the user-mode library itself. Compared with a conventional manner in which the kernel is used (all related registers are stored in a fixed manner), this solution allows the user mode to selectively store states based on a remote IPC service process.

If the remote service process is trustworthy, the client may store only a small quantity of states, similar to a conventional function call.

If the remote service process is untrustworthy, the client may store all the states in the same way as kernel maintenance.

4. Server dynamic extension mechanism: The hardware primitive allows a plurality of clients to call a client at the same time. By supporting a re-entrant work thread allocation method at the software layer, a function of dynamically extending a server thread can be implemented, and the scheduling context of the client can be reused.

IV. In software (the kernel and the user-mode library) collaborated secure zero-copy transmission, a security risk such as TOCTTOU is avoided by maintaining consistency/uniqueness of the relay segment memory.
1. The relay segment memory implements cross-chain zero-copy data transmission: A maximum relay segment memory transmission range is determined through multi-entity coordination, and secure zero-copy data transmission across a plurality of entities is implemented in combination with a mask (mask) mechanism of the relay segment memory.
2. An ownership transfer (ownership transfer) feature is supported: The kernel maintains the uniqueness of the virtual address range of the relay segment memory and the physical range of the relay segment memory, to implement the ownership transfer feature in the relay segment memory handover process.

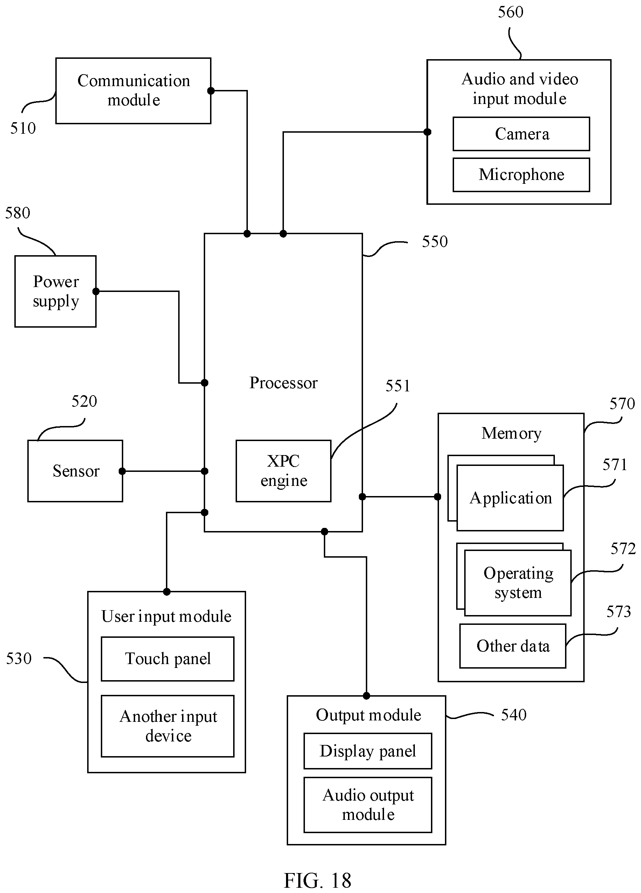

FIG. 18 is a schematic structural diagram of a computer system according to an embodiment. The computer system may be a smartphone, a self-driving device used in a self-driving car, or the like. As shown in the figure, the computer system includes a communication module 510, a sensor 520, a user input module 530, an output module 540, a processor 550, an audio and video input module 560, a memory 570, and a power supply 580.

The communication module 510 may include at least one module that enables communication between the computer system and a communication system or another computer system. For example, the communication module 510 may include one or more of a wired network interface, a broadcast receiving module, a mobile communication module, a wireless Internet module, a local communication module, a location (or positioning) information module, and the like. The plurality of modules are all implemented in a plurality of ways in a conventional technology, which are not described one by one in this embodiment.

The sensor 520 may sense a current state of the system, such as a switch-on/off state, a location, whether there is contact with a user, a direction, and acceleration/deceleration, and the sensor 520 may generate a sensing signal for controlling an operation of the system.

The user input module 530 is configured to: receive input digital information, character information, or a contact touch operation/non-contact gesture, receive a signal input related to user settings and function control of the system, and the like. The user input module 530 includes a touch panel and/or another input device.

The output module 540 includes a display panel, configured to display information entered by a user, information provided for the user, various menu interfaces of the system, and the like. Optionally, the display panel may be configured in a form of a liquid crystal display (liquid crystal display, LCD), an organic light-emitting diode (organic light-emitting diode, OLED), or the like. In some other embodiments, the touch panel may cover the display panel to form a touch display. In addition, the output module 540 may further include an audio output module, an alarm, a tactile module, and the like.

The audio and video input module 560 is configured to input an audio signal or a video signal. The audio and video input module 560 may include a camera and a microphone.

The power supply 580 may receive external power and internal power under control of the processor 550, and provide power required for operations of various components of the system.

The processor 550 may indicate one or more processors. For example, the processor 550 may include one or more central processing units, or include one central processing unit and one graphics processing unit, or include one application processor and one coprocessor (for example, a micro control unit or a neural network processor). When the processor 550 includes a plurality of processors, the plurality of processors may be integrated on a same chip, or may be independent chips. One processor may include one or more physical cores, where the physical core is a smallest processing unit.

An XPC engine 551 (also referred to as an inter-process communication engine, or a communication engine for short) provided in this embodiment is disposed on the processor 550. Specifically, the XPC engine 551 and the processor 550 may be integrated on one chip, or disposed on one board with the processor. In another embodiment, the XPC engine 551 may be connected to the processor 550 in a manner not shown in the figure. For specific implementation of the XPC engine, refer to the foregoing embodiment, and details are not described herein again.

The memory 570 stores computer programs. The computer programs include an operating system program 572, an application 571, and the like. Typical operating systems, for example, include seL4, L4, or microkernel operating systems such as Fuchsia provided by Google, or systems used for desktop computers or notebook computers such as Windows of Microsoft and MacOS of Apple, or systems used for a mobile terminal, such as a Linux^{®}-based Android (Android^{®}) system developed by Google.

The memory 570 may be one or more of the following types: a flash (flash) memory, a hard disk type memory, a micro multimedia card type memory, a card type memory (such as an SD or XD memory), a random access memory (random access memory, RAM), a static random access memory (static RAM, SRAM), a read-only memory (read only memory, ROM), an electrically erasable programmable read-only memory (electrically erasable programmable read-only memory, EEPROM), a programmable read-only memory (programmable ROM, PROM), a magnetic memory, a magnetic disk, or an optical disc. In some other embodiments, the memory 570 may alternatively be a network storage device on the Internet, and the system may perform an operation such as updating or reading the memory 570 on the Internet.

The processor 550 is configured to: read the computer programs in the memory 570, and then execute a method defined by the computer programs. For example, the processor 550 reads an operating system program 572 to run, in the system, an operating system and implement various functions of the operating system, or reads one or more applications 571 to run an application in the system. If the XPC solution provided in this application is implemented in a form of software, the XPC solution may be stored in the memory 570 in a form of computer programs, and is read and executed by the processor 550.

The memory 570 further stores other data 573 in addition to the computer programs, for example, an x-entry table, a link stack, and a relay segment list in this application.

A connection relationship between the modules in FIG. 18 is merely an example. The method provided in any embodiment of this application may also be applied to a terminal device in another connection manner. For example, all modules are connected through a bus. Division into the modules in FIG. 18 is merely logical division, and does not indicate that the modules are necessarily separated in hardware. Not all the modules in FIG. 18 are necessary in another embodiment of this application.

In addition, this application further provides a storage medium, a computer program product, computer programs, and the like related to the solution provided in this application. For specific implementation, refer to the foregoing embodiment.

To completely describe the solution of this application, implementations are described in a plurality of parts in this application. To better make a reader understand the solution of this application, this application also provides different cases to describe the entire solution. It should be understood that, some associations exist between the parts, and reference may be made to each other for implementations associated with each other. There is some overlapping between the cases and the implementations of the parts and reference may also be made to each other, but this does not mean that a case needs to be implemented based on a particular process.

It should be noted that, for ease of application and understanding, some systems, modules, devices, elements, data structures, instructions, and the like that are mentioned are named in the embodiments of this application. Uppercase and lowercase of these names have same meanings unless otherwise specified. In addition, these names may be changed as required, and should not constitute any limitation on the solution provided in this application.

It should be noted that, the solution provided in this embodiment may be applied to a terminal device, a server, or the like. The terminal device herein includes but is not limited to a smartphone, an in-vehicle apparatus (for example, a self-driving device), a personal computer, an artificial intelligence device, a tablet computer, a personal digital assistant, an intelligent wearable device (for example, a smart watch or band or smart glasses), an intelligent voice device (for example, a smart speaker), a virtual reality/mixed reality/enhanced display device or a network access device (for example, a gateway), or the like. The server may include a storage server, a computing server, or the like.

It should be noted that, the module or unit division provided in the foregoing embodiment is merely used as an example, and the described functions of the modules are merely examples for description. This application is not limited thereto. A person of ordinary skill in the art may combine functions of two or more of the modules as required.

Same or similar parts between the embodiments described above may be cross-referenced. Unless otherwise specified, "a plurality of" in this application means two or more, or "at least two". "A/B" in this application includes three cases: "A", "B", and "A and B". In this application, an "identifier (id)" of an object refers to information that uniquely identifies the object. The "identifier" may directly identify the object, for example, a name of the object, or may indirectly indicate the object, for example, a storage address of the object. In this application, "first", "second", "third", and the like are merely used for distinguishing expressions, and are not intended to limit a sequence. In addition, a first object and a second object may be combined or refer to a same object in some cases. Further, because there is no limited sequence, there may be no first, and there may be second or third.

The described apparatus embodiment is merely an example. The modules described as separate parts may or may not be physically separate, and parts displayed as modules may or may not be physical modules, may be located in one position, or may be distributed on a plurality of network modules. Some or all the modules may be selected according to actual needs to achieve the objectives of the solutions of the embodiments. In addition, in the accompanying drawings of the apparatus embodiments provided by this application, connection relationships between modules indicate that the modules have communication connections with each other, which may be specifically implemented as one or more communication buses or signal cables. A person of ordinary skill in the art may understand and implement the embodiments of the present invention without creative efforts.

## Claims

1. A method for inter-process communication, wherein the method is applied to a computer device, the computer device comprises a hardware layer and an operating system running on the hardware layer, a caller and a callee that are to perform communication with each other run in the operating system, wherein the caller is a process and the callee is a process, the computer device further comprises a communication engine, and the method comprises:
calling, by the caller, a first instruction, wherein the first instruction is executed by the communication engine to implement switching from a context of the caller to a context of the callee; or
calling, by the callee, a second instruction, wherein the second instruction is executed by the communication engine to implement switching from the context of the callee to the context of the caller, wherein the first instruction and the second instruction are implemented asynchronously,
wherein a process in which the first instruction is executed by the communication engine to implement context switching comprises:
determining the context of the callee based on an identifier of the callee in the first instruction;
storing the context of the caller; and
switching to the context of the callee,
wherein the following step is performed in an asynchronous manner: storing the context of the caller.

2. The method according to claim 1, wherein when the communication engine executes the first instruction, the method further comprises:
obtaining capability information of the caller, wherein the capability information is used for indicating whether the caller has a permission to call the callee; and
executing a process of the context switching when determining, based on the capability information, that the caller has a permission to call the callee.

3. The method according to claim 1 or 2, wherein before the calling, by the caller, a first instruction, the method further comprises: storing the context of the caller, wherein the context is a partial context of the caller.

4. The method according to any one of claims 1 to 3, wherein a process in which the second instruction is executed by the communication engine to implement the context switching comprises:
reading the stored context of the caller, and switching to the context of the caller.

5. The method according to any one of claims 1 to 4, wherein the method further comprises:
applying for, by the caller, a memory area, and setting an address of the memory area into a register comprised in the communication engine; and
storing, by the caller, data that is to be transmitted to the callee into the memory area, wherein the callee is configured to access the memory area by using the address stored in the register, to obtain the data.

6. A method applied to a communication engine for implementing inter-process communication in an operating system, wherein the method comprises:
receiving a first instruction sent by a caller, wherein the first instruction comprises an identifier of a callee;
determining a context of the callee based on the identifier of the callee in a service set indicated by a first register, wherein the first register is configured to store a memory address of the service set, and the service set comprises context information of one or more callees;
storing a context of the caller into a return information set indicated by a second register, wherein the second register is configured to store a memory address of the return information set, and the return information set comprises context information of one or more callers; and
switching to the context of the callee,
wherein the caller is a process and the callee is a process,
wherein the following step is performed in an asynchronous manner: storing the context of the caller into the return information set indicated by the second register.

7. The method according to claim 6, wherein before the determining a context of the callee based on the identifier of the callee in a service set indicated by a first register, the method further comprises:
determining, based on capability information indicated by a third register, that the caller has a permission to call the callee, wherein the third register is configured to store an address of the capability information, and the capability information is used for indicating whether the caller has a permission to call the callee.

8. The method according to claim 6 or 7, further comprising:
prefetching either or both of the following information into a cache: the context information of the one or more callees that is comprised in the service set, or the capability information.

9. The method according to any one of claims 6 to 8, wherein the step of determining the context of the callee or the step of storing the context of the caller is implemented by using a tagged translation lookaside buffer TLB.

10. The method according to any one of claims 6 to 9, wherein the method further comprises:
assigning an access permission for a memory area indicated by a fourth register to the callee, wherein the fourth register is configured to store address information of the memory area, the memory area is applied by the caller, and the memory area is used for storing data to be transmitted by the caller to the callee.

11. The method according to any one of claims 6 to 9, wherein the method further comprises:
assigning an access permission for a second memory area indicated by a fourth register and a fifth register to the callee, wherein the fourth register is configured to store address information of a first memory area, the fifth register stores information used for reducing the first memory area, and the second memory area is a reduced first memory area.

12. The method according to any one of claims 6 to 11, wherein the method further comprises:
receiving a second instruction sent by the callee, wherein the second instruction is used for indicating to return to the context of the caller;
obtaining the context of the caller from the return information set indicated by the second register; and
switching to the context of the caller.

13. An apparatus for inter-process communication in an operating system, wherein the apparatus comprises:
a first unit, configured to receive a first instruction sent by a caller, wherein the first instruction comprises an identifier of a callee;
a second unit, configured to determine a context of the callee based on the identifier of the callee in a service set indicated by a first register, wherein the first register is configured to store a memory address of the service set, and the service set comprises context information of one or more callees;
a third unit, configured to store a context of the caller into a return information set indicated by a second register, wherein said step is configured to be performed in an asynchronous manner, wherein the second register is configured to store a memory address of the return information set, and the return information set comprises context information of one or more callers; and
a fourth unit, configured to switch to the context of the callee, the caller is a process and the callee is a process.

## Patentansprüche

1. Verfahren zur Interprozesskommunikation, wobei das Verfahren auf ein Computergerät angewendet wird, das Computergerät eine Hardwareebene und ein auf der Hardwareebene laufendes Betriebssystem umfasst, ein "Caller" und ein "Callee", die eine Kommunikation miteinander durchzuführen haben, in dem Betriebssystem laufen, wobei der "Caller" ein Prozess ist und der "Callee" ein Prozess ist, das Computergerät ferner eine Kommunikationsengine umfasst und das Verfahren Folgendes umfasst:
Aufrufen einer ersten Anweisung durch den "Caller", wobei die erste Anweisung durch die Kommunikationsengine ausgeführt wird, um einen Wechsel von einem Kontext des "Caller" zu einem Kontext des "Callee" zu implementieren, oder
Aufrufen einer zweiten Anweisung durch den "Callee", wobei die zweite Anweisung durch die Kommunikationsengine ausgeführt wird, um einen Wechsel von dem Kontext des "Callee" zu dem Kontext des "Caller" zu implementieren, wobei die erste Anweisung und die zweite Anweisung asynchron implementiert werden,
wobei ein Prozess, bei dem die erste Anweisung durch die Kommunikationsengine ausgeführt wird, um den Kontextwechsel zu implementieren, Folgendes umfasst:
Bestimmen des Kontexts des "Callee" basierend auf einer Kennung des "Callee" in der ersten Anweisung,
Speichern des Kontexts des "Caller"; und
Wechseln zu dem Kontext des "Callee",
wobei der folgende Schritt in einer asynchronen Weise durchgeführt wird: Speichern des Kontexts des "Caller".

2. Verfahren nach Anspruch 1, wobei das Verfahren, wenn die Kommunikationsengine die erste Anweisung ausführt, ferner Folgendes umfasst:
Erhalten von Fähigkeitsinformationen des "Caller", wobei die Fähigkeitsinformationen genutzt werden, um anzugeben, ob der "Caller" über eine Berechtigung zum Aufrufen des "Callee" verfügt, und
Ausführen eines Prozesses des Kontextwechsels, wenn basierend auf den Fähigkeitsinformationen bestimmt wird, dass der "Caller" über eine Berechtigung zum Aufrufen des "Callee" verfügt.

3. Verfahren nach Anspruch 1 oder 2, wobei das Verfahren vor dem Aufrufen einer ersten Anweisung durch den "Caller" ferner Folgendes umfasst: Speichern des Kontexts des "Caller", wobei der Kontext ein Teilkontext des "Caller" ist.

4. Verfahren nach einem der Ansprüche 1 bis 3, wobei ein Prozess, bei dem die zweite Anweisung durch die Kommunikationsengine ausgeführt wird, um den Kontextwechsel zu implementieren, Folgendes umfasst:
Lesen des gespeicherten Kontexts des "Caller" und Wechseln zu dem Kontext des "Caller".

5. Verfahren nach einem der Ansprüche 1 bis 4, wobei das Verfahren ferner Folgendes umfasst:
Anfordern eines Speicherbereichs durch den "Caller" und Setzen einer Adresse des Speicherbereichs in einem in der Kommunikationsengine umfassten Register; und
Speichern von Daten, die an den "Callee" zu übertragen sind, in dem Speicherbereich durch den "Caller", wobei der "Callee" konfiguriert ist, um unter Verwendung der in dem Register gespeicherten Adresse auf den Speicherbereich zuzugreifen, um die Daten zu erhalten.

6. Verfahren, das auf eine Kommunikationsengine zum Implementieren einer Interprozesskommunikation in einem Betriebssystem angewendet wird, wobei das Verfahren Folgendes umfasst:
Empfangen einer von einem "Caller" gesendeten ersten Anweisung, wobei die erste Anweisung eine Kennung eines "Callee" umfasst,
Bestimmen eines Kontexts des "Callee" basierend auf der Kennung des "Callee" in einem Dienstsatz, der von einem ersten Register angegeben wird, wobei das erste Register konfiguriert ist, um eine Speicheradresse des Dienstsatzes zu speichern, und der Dienstsatz Kontextinformationen eines oder mehrerer "Callees" umfasst,
Speichern eines Kontexts des "Caller" in einem Rückkehrinformationssatz, der von einem zweiten Register angegeben wird, wobei das zweite Register konfiguriert ist, um eine Speicheradresse des Rückkehrinformationssatzes zu speichern, und der Rückkehrinformationssatz Kontextinformationen eines oder mehrerer "Callers" umfasst, und
Wechseln zu dem Kontext des "Callee",
wobei der "Caller" ein Prozess ist und der "Callee" ein Prozess ist,
wobei der folgende Schritt in einer asynchronen Weise durchgeführt wird: Speichern des Kontexts des "Caller" in dem Rückkehrinformationssatz, der von dem zweiten Register angegeben wird.

7. Verfahren nach Anspruch 6, wobei das Verfahren vor dem Bestimmen eines Kontexts des "Callee" basierend auf der Kennung des "Callee" in einem Dienstsatz, der von einem ersten Register angegeben wird, ferner Folgendes umfasst:
Bestimmen basierend auf von einem dritten Register angegebenen Fähigkeitsinformationen, dass der "Caller" über eine Berechtigung zum Aufrufen des "Callee" verfügt, wobei das dritte Register konfiguriert ist, um eine Adresse der Fähigkeitsinformationen zu speichern, und die Fähigkeitsinformationen genutzt werden, um anzugeben, ob der "Caller" über eine Berechtigung zum Aufrufen des "Callee" verfügt.

8. Verfahren nach Anspruch 6 oder 7, das ferner Folgendes umfasst:
Vorabladen der folgenden Informationen in einen Cache: der Kontextinformationen des einen oder der mehreren "Callees", die in dem Dienstsatz umfasst sind, und/oder der Fähigkeitsinformationen.

9. Verfahren nach einem der Ansprüche 6 bis 8, wobei der Schritt des Bestimmens des Kontexts des "Callee" oder der Schritt des Speicherns des Kontexts des "Caller" unter Verwendung eines getaggten "Translation Lookaside Buffer" TLB implementiert wird.

10. Verfahren nach einem der Ansprüche 6 bis 9, wobei das Verfahren ferner Folgendes umfasst:
Zuweisen einer Zugriffsberechtigung für einen von einem vierten Register angegebenen Speicherbereich zu dem "Callee", wobei das vierte Register konfiguriert ist, um Adressinformationen des Speicherbereichs zu speichern, der Speicherbereich von dem "Caller" angefordert wird und der Speicherbereich genutzt wird, um von dem "Caller" an den "Callee" zu übertragende Daten zu speichern.

11. Verfahren nach einem der Ansprüche 6 bis 9, wobei das Verfahren ferner Folgendes umfasst:
Zuweisen einer Zugriffsberechtigung für einen von einem vierten Register und einem fünften Register angegebenen zweiten Speicherbereich zu dem "Callee", wobei das vierte Register konfiguriert ist, um Adressinformationen eines ersten Speicherbereichs zu speichern, das fünfte Register zum Reduzieren des ersten Speicherbereichs genutzte Informationen speichert und der zweite Speicherbereich ein reduzierter erster Speicherbereich ist.

12. Verfahren nach einem der Ansprüche 6 bis 11, wobei das Verfahren ferner Folgendes umfasst:
Empfangen einer von dem "Callee" gesendeten zweiten Anweisung, wobei die zweite Anweisung genutzt wird, um die Rückkehr zu dem Kontext des "Caller" anzugeben,
Erhalten des Kontexts des "Caller" aus dem Rückkehrinformationssatz, der von dem zweiten Register angegeben wird, und
Wechseln zu dem Kontext des "Caller".

13. Vorrichtung zur Interprozesskommunikation in einem Betriebssystem, wobei die Vorrichtung Folgendes umfasst:
eine erste Einheit, die konfiguriert ist, um eine von einem "Caller" gesendete erste Anweisung zu empfangen, wobei die erste Anweisung eine Kennung eines "Callee" umfasst,
eine zweite Einheit, die konfiguriert ist, um einen Kontext des "Callee" basierend auf der Kennung des "Callee" in einem Dienstsatz, der von einem ersten Register angegeben wird, zu bestimmen, wobei das erste Register konfiguriert ist, um eine Speicheradresse des Dienstsatzes zu speichern, und der Dienstsatz Kontextinformationen eines oder mehrerer "Callees" umfasst,
eine dritte Einheit, die konfiguriert ist, um einen Kontext des "Caller" in einem Rückkehrinformationssatz, der von einem zweiten Register angegeben wird, zu speichern, wobei der Schritt konfiguriert ist, um in einer asynchronen Weise durchgeführt zu werden, wobei das zweite Register konfiguriert ist, um eine Speicheradresse des Rückkehrinformationssatzes zu speichern, und der Rückkehrinformationssatz Kontextinformationen eines oder mehrerer "Callers" umfasst, und
eine vierte Einheit, die konfiguriert ist, um zu dem Kontext des "Callee" zu wechseln, wobei der "Caller" ein Prozess ist und der "Callee" ein Prozess ist.

## Revendications

1. Procédé pour la communication inter-processus, le procédé étant appliqué à un dispositif informatique, le dispositif informatique comprenant une couche matérielle et un système d'exploitation s'exécutant sur la couche matérielle, un appeleur et un appelé qui doivent effectuer une communication l'un avec l'autre s'exécutant dans le système d'exploitation, l'appeleur étant un processus et l'appelé étant un processus, le dispositif informatique comprenant en outre un moteur de communication, et le procédé comprenant l'étape consistant à :
appeler, par l'appeleur, une première instruction, la première instruction étant exécutée par le moteur de communication pour mettre en œuvre une commutation d'un contexte de l'appeleur vers un contexte de l'appelé ; ou
appeler, par l'appelé, une deuxième instruction, la deuxième instruction étant exécutée par le moteur de communication pour mettre en œuvre une commutation du contexte de l'appelé vers le contexte de l'appeleur, la première instruction et la deuxième instruction étant mises en œuvre de manière asynchrone,
dans lequel un processus dans lequel la première instruction est exécutée par le moteur de communication pour mettre en œuvre une commutation de contexte consiste à :
déterminer le contexte de l'appelé sur la base d'un identifiant de l'appelé dans la première instruction ;
stocker le contexte de l'appeleur ; et
commuter vers le contexte de l'appelé,
dans lequel l'étape suivante est effectuée d'une manière asynchrone : stocker le contexte de l'appeleur.

2. Procédé selon la revendication 1, le procédé, lorsque le moteur de communication exécute la première instruction, comprenant en outre les étapes consistant à :
obtenir une information de capacité de l'appeleur, l'information de capacité servant à indiquer si l'appeleur dispose d'une permission d'appeler l'appelé ; et
exécuter un processus de la commutation de contexte lorsqu'il est déterminé, sur la base de l'information de capacité, que l'appeleur dispose d'une permission d'appeler l'appelé.

3. Procédé selon la revendication 1 ou 2, le procédé, avant l'appel par l'appeleur d'une première instruction, comprenant en outre l'étape consistant à : stocker le contexte de l'appeleur, le contexte étant un contexte partiel de l'appeleur.

4. Procédé selon l'une quelconque des revendications 1 à 3, dans lequel un processus dans lequel la deuxième instruction est exécutée par le moteur de communication pour mettre en œuvre la commutation de contexte comprend l'étape consistant à :
lire le contexte stocké de l'appeleur, et commuter vers le contexte de l'appeleur.

5. Procédé selon l'une quelconque des revendications 1 à 4, le procédé comprenant en outre les étapes consistant à :
demander, par l'appeleur, une zone de mémoire, et définir une adresse de la zone de mémoire dans un registre compris dans le moteur de communication ; et
stocker, par l'appeleur, des données qui doivent être transmises à l'appelé dans la zone de mémoire, l'appelé étant configuré pour accéder à la zone de mémoire au moyen de l'adresse stockée dans le registre, pour obtenir les données.

6. Procédé appliqué à un moteur de communication pour la mise en œuvre d'une communication inter-processus dans un système d'exploitation, le procédé comprenant les étapes consistant à :
recevoir une première instruction envoyée par un appeleur, la première instruction comprenant un identifiant d'un appelé ;
déterminer un contexte de l'appelé sur la base de l'identifiant de l'appelé dans un ensemble de services indiqué par un premier registre, le premier registre étant configuré pour stocker une adresse mémoire de l'ensemble de services, et l'ensemble de services comprenant une information contextuelle d'un ou plusieurs appelés ;
stocker un contexte de l'appeleur dans un ensemble d'informations de retour indiqué par un deuxième registre, le deuxième registre étant configuré pour stocker une adresse mémoire de l'ensemble d'informations de retour, et l'ensemble d'informations de retour comprenant une information contextuelle d'un ou plusieurs appeleurs ; et
commuter vers le contexte de l'appelé ;
dans lequel l'appeleur est un processus et l'appelé est un processus,
dans lequel l'étape suivante est effectuée d'une manière asynchrone : stocker le contexte de l'appeleur dans l'ensemble d'informations de retour indiqué par le deuxième registre.

7. Procédé selon la revendication 6, le procédé, avant la détermination d'un contexte de l'appelé sur la base de l'identifiant de l'appelé dans un ensemble de services indiqué par un premier registre, comprenant en outre l'étape consistant à :
déterminer, sur la base d'une information de capacité indiquée par un troisième registre, que l'appeleur dispose d'une permission d'appeler l'appelé, le troisième registre étant configuré pour stocker une adresse de l'information de capacité, et l'information de capacité servant à indiquer si l'appeleur dispose d'une permission d'appeler l'appelé.

8. Procédé selon la revendication 6 ou 7, comprenant en outre l'étape consistant à :
pré-extraire l'une ou l'autre des informations suivantes, ou les deux, dans un cache : l'information contextuelle des un ou plusieurs appelés qui est comprise dans l'ensemble de services, ou l'information de capacité.

9. Procédé selon l'une quelconque des revendications 6 à 8, dans lequel l'étape de détermination du contexte de l'appelé ou l'étape de stockage du contexte de l'appeleur est mise en œuvre au moyen d'un répertoire des pages actives TLB étiqueté.

10. Procédé selon l'une quelconque des revendications 6 à 9, le procédé comprenant en outre l'étape consistant à :
attribuer à l'appelé une permission d'accès concernant une zone de mémoire indiquée par un quatrième registre, le quatrième registre étant configuré pour stocker une information d'adresse de la zone de mémoire, la zone de mémoire étant demandée par l'appeleur, et la zone de mémoire servant à stocker des données à faire transmettre à l'appelé par l'appeleur.

11. Procédé selon l'une quelconque des revendications 6 à 9, le procédé comprenant en outre l'étape consistant à :
attribuer à l' appelé une permission d'accès concernant une deuxième zone de mémoire indiquée par un quatrième registre et un cinquième registre, le quatrième registre étant configuré pour stocker une information d'adresse d'une première zone de mémoire, le cinquième registre stockant une information servant à réduire la première zone de mémoire, et la deuxième zone de mémoire étant une première zone de mémoire réduite.

12. Procédé selon l'une quelconque des revendications 6 à 11, le procédé comprenant en outre les étapes consistant à :
recevoir une deuxième instruction envoyée par l'appelé, la deuxième instruction servant à ordonner le retour au contexte de l'appeleur ;
obtenir le contexte de l'appeleur à partir de l'ensemble d'informations de retour indiqué par le deuxième registre ; et
commuter vers le contexte de l'appeleur.

13. Appareil pour la communication inter-processus dans un système d'exploitation, l'appareil comprenant :
une première unité, configurée pour recevoir une première instruction envoyée par un appeleur, la première instruction comprenant un identifiant d'un appelé ;
une deuxième unité, configurée pour déterminer un contexte de l'appelé sur la base de l'identifiant de l'appelé dans un ensemble de services indiqué par un premier registre, le premier registre étant configuré pour stocker une adresse mémoire de l'ensemble de services, et l'ensemble de services comprenant une information contextuelle d'un ou plusieurs appelés ;
une troisième unité, configurée pour stocker un contexte de l'appeleur dans un ensemble d'informations de retour indiqué par un deuxième registre, ladite étape étant configurée pour être effectuée d'une manière asynchrone, le deuxième registre étant configuré pour stocker une adresse mémoire de l'ensemble d'informations de retour, et l'ensemble d'informations de retour comprenant une information contextuelle d'un ou plusieurs appeleurs ; et
une quatrième unité, configurée pour commuter vers le contexte de l'appelé,
dans lequel l'appeleur est un processus et l'appelé est un processus.
